# EUROPÄISCHE PATENTSCHRIFT

(11) **EP 4 469 709 B1**
(45) Veröffentlichungstag und Bekanntmachung des Hinweises auf die Patenterteilung: **04.11.2026**
(21) Anmeldenummer: 22826811.6
(22) Anmeldetag: 30.11.2022
(51) Int. Cl.: F16M 11/04, A47B 57/04, A47F 5/08, F16M 13/02, F16M 11/10

(54) **KLEMMSCHLITTENSCHIENENHALTERUNGSVORRICHTUNG**
CLAMPING CARRIAGE RAIL HOLDING DEVICE
DISPOSITIF DE MAINTIEN DE RAIL DE CHARIOT DE PINÇAGE

(30) Priorität: 30.11.2021 LU 500933
(43) Veröffentlichungstag der Anmeldung: 04.12.2024
(73) Patentinhaber: Better Basics Laborbedarf GmbH, 01159 Dresden (DE)
(72) Erfinder: HEINZE, Marcus, 01159 Dresden (DE); STEIN, Sebastian, 01159 Dresden (DE); SCHNEIDER, Mario, 01159 Dresden (DE)
(74) Vertreter: Gruner, Leopold Joachim
(86) Internationale Anmeldenummer: PCT/EP2022/083958
(87) Internationale Veröffentlichungsnummer: WO 2023/099628

(56) Entgegenhaltungen:
- EP-A1- 3 643 209
- EP-A2- 0 976 937
- EP-A2- 1 195 117
- WO-A1-2013/052975
- DE-A1- 10 057 351
- US-A- 5 337 987
- US-A- 5 960 965

## Beschreibung

### Technisches Gebiet

Die Erfindung betrifft eine Klemmschlittenschienenhalterungsvorrichtung zur reversiblen Befestigung eines Halterungsschlittens innerhalb einer Profilschiene, wobei an dem Halterungsschlitten ein oder mehrere Gegenstände befestigt sein können und wobei der Halterungsschlitten innerhalb der Profilschiene geführt werden kann.

### Stand der Technik

Aus dem Stand der Technik sind Konstruktionsprofile (auch: Hohlkammerprofile, Montageprofile, Nutenprofile), C-Nut-Schienen, T-Nut-Schienen oder Kederprofilschienen bekannt, die in verschiedenen Ausführungsformen erhältlich sind. Die Profilschienen werden im Strangpressverfahren hergestellt und umfassen zumindest eine Nut.

Innerhalb der Nut können z.B. sogenannte Nutensteine positioniert werden. Diese sind derart ausgestaltet, dass sie die Verbindung eines Elements mit der Nut und damit der Profilschiene erlauben. So kann das Element über eine Schraubverbindung mit dem Nutenstein verbunden werden.

Weiterhin sind Nutensteine mit einem Gewinde und seitlichen Klemmbacken bekannt, welche innerhalb einer Nut platziert werden. Ein Eindrehen einer Schraube bewirkt ein Auseinandertreiben der Klemmbacken, wodurch der Nutenstein innerhalb der Nut fixiert werden kann.

Möchte man jedoch einen Gegenstand über einen beschriebenen Nutenstein mit der Profilschiene verbinden, ist eine Schraubverbindung nachteilig, da ein einfaches und schnelles Befestigen des Gegenstandes nicht möglich ist.

Profilschienen werden auch häufig für die Befestigung von flächigen Elementen verwendet. So sind Winkelleisten bekannt, die formschlüssig mit eine T-Nutschiene verbunden werden können. Dabei weist das flächige Element an dessen Außenkante die Winkelleiste auf. Diese wird in die Nut eingehängt. Dabei stellt sich der Vorgang so dar, dass das flächige Element mit beiden Händen gegriffen und die Winkelleiste in die Nut geführt, leicht gedreht und in der Nut abgesenkt wird. Um die Winkelleiste aus der Nut zu entfernen, wird der Vorgang in umgekehrter Reihenfolge durchgeführt. Dabei ist nachteilig, dass es häufig zu einem Verkanten kommt und die Winkelleiste nicht widerstandsfrei aus der Nut gehoben werden kann. Weiterhin muss das flächige Element/ die Winkelleiste für ein möglichst widerstandsfreies Einführen/Entfernen in/aus der Nut mit beiden Händen gegriffen werden, so dass eine einhändige Befestigung oder ein einhändiges Entfernen der Winkelleiste nicht möglich ist.

Die US 5,960,965 A offenbart ein Warenpräsentationssystem, das eine Trägerplatte aufweist, auf der das zu präsentierende Produkt platziert wird. Die Trägerplatte weist an einem Ende einen Vorsprung auf, welcher in die Nut eines Kanals so eingesteckt werden kann, dass der Vorsprung gleitend innerhalb der Nut geführt werden kann. Eine gegenüber der Nutöffnung angeordnete Stellschraube dient dazu den in die Nut eingeführten Vorsprung reibschlüssig zu fixieren. Daraus ergibt sich nachteilig, dass die Trägerplatte nur so weit mit dem Gewicht eines zu präsentierenden Produktes belastbar ist, bis die durch die Stellschraube bewirkte Klemmwirkung überwunden wird und die Trägerplatte einen anderen Winkel einnimmt. Zudem ist ein einfaches Einführen oder Herausnehmen des Vorsprungs in oder aus der Nut nicht möglich, da der Widerstand, welcher durch die Öffnungsbreite der Nut vorgegeben ist, überwunden werden muss. Weiterhin ist ein Werkzeug notwendig, um die Stellschraube zu betätigen.

Die WO 2013/052 975 A1 offenbart eine Vorrichtung zum Aufbewahren von Utensilien, insbesondere Werkzeugen in einer Lagerschale. Eine Lagerschale kann in zumindest zwei Winkelstellungen in eine Schiene mit einer Aufnahmenut eingehängt werden. Hierfür weist die Lagerschaleneinheit mindestens eine Nase auf, die das Verbinden der Lagerschaleneinheit mit der Schiene ermöglicht, indem die Nase in die Aufnahmenut der Trageinheit einsetzbar ist. Nachteilig hieran ist einerseits, dass ein Einsetzen der richtigen Nase in die Aufnahmenut, um die gewünschte Winkelstellung zu erreichen, oft nicht auf Anhieb gelingt. Zudem ist die Lagerschaleneinheit aufgrund komplex ausgestaltet und daher aufwendig in der Produktion. Zudem ist es bei dieser Anordnung erforderlich, dass das Verbindungsstück das Profil umgreifend ausgestaltet ist, um ein stabiles Einhängen des Verbindungsstücks das Profil zu gewährleisten. Hierdurch kann das Profil nachteilig nie bündig in einer Wand angeordnet sein, da die Randbereiche der Profilnut sich immer so weit von der Wand abheben müssen, dass ein Eingreifen des Verbindungsstückes ermöglicht ist, um die Vorrichtung an der Profilschiene zu befestigen.

Die DE 100 57 351 A1 offenbart eine Haltevorrichtung für einen Sensor. Die Haltevorrichtung weist eine Schiene mit einer Nut auf, in welche ein Nutenstein eingeführt werden kann. Für eine stabile Verbindung muss der Nutenstein jedoch über ein Stellelement, welches aus einer Schraubmutter-Stift-Verbindung gebildet ist, innerhalb der Nut festgeklemmt werden. Ein schnelles Einsetzen und Herausnehmen der Nutensteine und insbesondere das Entfernen des Sensors von der Haltevorrichtung ist somit nicht möglich. Weiterhin wird für die Befestigung des Sensors an der Haltervorrichtung ein Werkzeug benötigt.

Die EP 0 976 937 A2 offenbart eine Gelenkanordnung für Werkzeugmaschinen zur Positionierung von Werkzeug und Werkstück relativ zueinander. Die Vorrichtung sieht eine, innerhalb eines Gehäuses angeordnete, Gelenkteil vor, die in einem begrenzten Bereich innerhalb des Gehäuses schwenkbar ist. Dabei soll die Vorrichtung eine eindeutige Festlegung des Schwenkmittelpunktes ermöglichen. Das Gelenkteil weist eine durchgehende Bohrung durch den Schwenkmittelpunkt auf. Unterhalb des Gehäuses ist eine Flanschbüchse zentrisch zum Schwenkmittelpunkt angeordnet. Mittels eines Justierstiftes, der durch die durchgehende Bohrung und durch die Flanschbüchse geführt wird, kann der Schwenkmittelpunkt festgestellt werden. Das Gelenkteil ist jedoch formschlüssig innerhalb des Gehäuses angeordnet und kann nicht ohne Weiteres aus diesem entnommen werden. Zudem erlaubt die Vorrichtung kein flexibles Verschieben des Gelenkteils entlang der Längsachse des Gehäuses. US5337987A offenbart keine Halterungsschlitten und keine Nuteinrasterhebung die im Wesentlichen entlang des Umfangs der Kreisfläche der Nut angeordnet ist.

### Aufgabe

Es ist daher Aufgabe der vorliegenden Erfindung eine Vorrichtung bereitzustellen, die eine einfachere und schnelle Befestigung eines Halterungsschlittens innerhalb einer Profilschiene erlaubt. Weiterhin soll die Befestigung ohne ein Verkanten des Halterungsschlittens innerhalb der Nut der Profilschiene erfolgen können. An dem Halterungsschlitten soll zumindest ein Gegenstand befestigt werden können.

### Lösung

Die Aufgabe wird mit einer Klemmschlittenschienenhalterungsvorrichtung mit den Merkmalen des Anspruchs 1 erfüllt. Weitere vorteilhafte Ausgestaltungen sind den Unteransprüchen und der Beschreibung zu entnehmen.

### Allgemeine Vorteile

Die erfindungsgemäße Vorrichtung erlaubt, dass ein Gegenstand über einen Halterungsschlitten, der ein Federeinrastelement umfasst, mit einer Profilschiene reversibel und schnell formschlüssig verbunden werden kann. Dabei kann die Befestigung mit einem Schritt weniger erfolgen, da der Halterungsschlitten, genauer dessen Federeinrastelement, im Gegensatz zu einer Winkelleiste nicht in der Nut abgesenkt werden muss. Somit wird auch einem Verkanten vorgebeugt. Weiterhin erhält der Nutzer ein haptisches Feedback, wenn der Halterungsschlitten erfolgreich mit der Profilschiene verbunden ist.

Weitere Vorteile sind der Beschreibung und den Ausführungsbeispielen zu entnehmen.

### Beschreibung der Erfindung

Die erfindungsgemäße Klemmschlittenschienenhalterungsvorrichtung (1.0) (auch: Vorrichtung), umfasst zumindest eine Profilschiene und zumindest einen Halterungsschlitten. Dabei kann der Halterungsschlitten reversibel an die Profilschiene befestigt werden. Unter einer reversiblen Befestigung wird eine reversible Verbindung zumindest zweier Elemente verstanden.

Die Klemmschlittenhalterungsvorrichtung umfasst zumindest eine Profilschiene (2.0). Dem Fachmann ist eine Vielzahl an Profilschienen (bspw. T-Nut-Schiene, C-Nut-Schiene, Kederprofilschienen) bekannt. Im Wesentlichen umfasst eine Profilschiene ein längliches Element, in welchem zumindest eine Nut (3.0) angeordnet ist, wobei sich die Nut entlang der Längsachse der Profilschiene erstreckt. Im Querschnitt zur Längsachse der Profilschiene kann die Nut bspw. ein T-förmiges, oder ein im Wesentlichen C-förmiges Profil umfassen. In einer besonders bevorzugten Ausgestaltung umfasst die Nut im Querschnitt ein im Wesentlichen kreisrundes Profil. In einer weiteren Ausgestaltung kann die Nut im Querschnitt ein im Wesentlichen ovales, oder ein mehreckiges, wie dreieckiges, oder viereckiges Profil umfassen. Denkbar sind zudem Kombinationen daraus. So kann eine Nut im Querschnitt auch ein partiell ovales sowie viereckiges Profil aufweisen. Das Profil kann zudem auch polygonförmig ausgestaltet sein.

Dem Fachmann sind Profilschienen bekannt, die mehrere parallel angeordnete Nuten umfassen. In einer Ausführungsform können die Nuten entlang der Längsachse der Profilschiene auch unterbrochen sein.

Bevorzugt umfasst die Nut einen Nutenhohlraum, eine Nutentiefe, eine Nutenbreite, eine Nutöffnung, eine Nutöffnungskante und eine Nutöffnungsbreite. Unter dem Nutenhohlraum (3.1) wird der hohle Raum der Nut verstanden. Eine Nut weist eine Nutentiefe (3.2) auf. Die Nutentiefe bezeichnet den Abstand zwischen der Oberfläche der Profilschiene und dem tiefsten Punkt der Nut. Der tiefste Punkt der Nut wird als Nutengrund (3.3) bezeichnet. Weiterhin weist eine Nut eine Nutenbreite (3.4) auf, wobei die Nutentiefe und Nutenbreite im Wesentlichen die gleichen Abmessungen aufweisen können. Die Dimensionen des Nutenhohlraums sind durch die Nutentiefe und die Nutenbreite begrenzt.

Weiterhin umfasst eine Nut eine Nutöffnung (3.5), durch welche ein Gegenstand (bspw. ein Halterungsschlitten, siehe weiter unten) in den Nutenhohlraum eingeführt werden kann. Die Nutöffnung stellt also eine Fluidverbindung zwischen dem Nutenhohlraum und dem Raum außerhalb der Profilschiene her. Die Nutöffnung umfasst eine Nutöffnungsbreite (3.6), wobei die Abmessung der Nutöffnungsbreite der der Nutenbreite entsprechen kann. Bevorzugt ist die Abmessung der Nutöffnungsbreite um zumindest 10 %, besonders bevorzugt um zumindest 20% und ganz besonders bevorzugt um zumindest 30% geringer als die der Nutenbreite. Weiterhin bevorzugt ist die Abmessung der Nutöffnungsbreite um zumindest 15 % bis 30 %, besonders bevorzugt zumindest 20 % bis 30 %, ganz besonders bevorzugt um 25 % geringer als die der Nutbreite. Mit einer geringeren Nutöffnungsbreite geht bevorzugt eine stabilere Befestigung des Halterungsschlittens innerhalb der Nut einher. Die Dicke des weiter unten definierten Halterungselements, die Nutöffnungsbreite und der Drehwinkel beim Einsetzen des weiter unten definierten Halterungsschlittens in die Nut bedingen einander. So kann die Nutöffnungsbreite kleiner ausfallen, wenn auch die Dicke des Halterungselements kleiner ausfällt. Weiterhin kann der Einführwinkel (siehe weiter unten), in dem der Halterungsschlitten in die Profilschiene eingesetzt wird, größer ausfallen, wenn die Dicke des Halterungselements kleiner ausfällt und/oder die Nutöffnungsbreite größer ausgestaltet ist.

Die Nutöffnung ist durch zumindest zwei Nutöffnungskanten (3.7) begrenzt, die zueinander gegenüber liegend beabstandet sind, wobei die Nutöffnungsbreite im Wesentlichen den Abstand der Nutöffnungskanten zueinander umfasst. Eine Nutöffnungskante kann abgefast, oder mit einer Rundung ausgestaltet sein, wodurch sich vorteilhaft ergibt, dass die Auflagefläche des Halterungsschlittens erhöht ist. Ein weiterer Vorteil ist, dass der Halterungsschlitten so leichter in der Nut bewegt werden kann.

Bevorzugt wird eine Profilschiene, deren Nut eine Nutöffnung mit einer Nutöffnungsbreite umfasst, deren Abmessung geringer ist als die der Nutenbreite. Dadurch ergibt sich vorteilhaft eine bessere formschlüssige Verbindung des Halterungsschlittens mit der Profilschiene. Es sind allerdings auch Ausführungsformen von Nuten denkbar, bei denen die Nutöffnungsbreite der Nutenbreite entspricht. Dies erlaubt vorteilhaft einen besseren Zugang zum Nutenhohlraum (bspw. zu Reinigungszwecken).

In einer besonders bevorzugten Ausführungsform umfasst die Nut im Querschnitt eine konkave Wölbung (2.1), bzw. ist zumindest teilweise konkav ausgestaltet. Eine solche Form ergibt sich beispielsweise, indem die Nut im Querschnitt ein kreisrundes oder ovales Profil aufweist.

Die erfindungsgemäße Vorrichtung umfasst einen Halterungsschlitten (4.0), der reversibel an der Profilschiene befestigt werden kann, indem er in der Nut angeordnet wird und bevorzugt zumindest so lange entlang der Längsachse der Nut im Wesentlichen widerstandsfrei bewegt werden kann, bis zumindest ein Federeinrastelement mir einer Nuteinrasterhebung bei bestimmungsgemäßem Gebrauch in Eingriff gelangt. In einer Ausführungsform ist auch nach dem Eingriff des Halterungsschlittens ein leichtgängiges Verschieben des Halterungsschlittens innerhalb der Nut möglich.

Der Halterungsschlitten umfasst bevorzugt zumindest ein Halterungselement (4.1). An dem Halterungselement können unterschiedliche Gegenstände befestigt werden oder das Halterungselement ist als ein Bestandteil eines Gegenstandes ausgebildet. Das Halterungselement kann beispielsweise mit Löchern oder Gewindebohrungen versehen sein, welche die reversible oder dauerhafte Anbringung von Gegenständen erlaubt. Weiterhin kann das Halterungselement aus mehreren Komponenten gebildet sein, die formschlüssig und/oder kraftschlüssig und/oder stoffschlüssig miteinander verbindbar sind. Zudem kann das Halterungselement beliebig ausgestaltet sein, wobei die Ausgestaltung des Halterungselements von der Art der Verbindung eines daran befestigbaren Gegenstandes sowie der Form des Gegenstandes abhängt. Bei erfolgter Befestigung des Halterungsschlittens an der Profilschiene ist die Halterungselementmittelachse (4.2) in einer bevorzugten Ausführungsform rechtwinklig zur Profilschienenoberfläche (2.2) orientiert, kann aber auch -je nach gewünschter oder geforderter Ausgestaltung des Halterungselements- in einem davon abweichenden Winkel angeordnet sein. In einer weiteren Ausführungsform kann der Winkel der Halterungselementmittelachse variabel eingestellt werden. Dies kann beispielsweise über ein arretierbares Gelenk erfolgen.

Weiterhin umfasst der Halterungsschlitten ein Federeinrastelement (4.3), welches innerhalb des Nutenhohlraums angeordnet werden kann. Der Zweck des Federeinrastelements besteht im Wesentlichen darin, den Halterungsschlitten so mit der Nut zu verbinden, so dass der Halterungsschlitten nicht aus der Nut herausfallen kann und mit der Nut, also der Profilschiene, formschlüssig verbunden ist. Das Federeinrastelement umfasst eine Federeinrastelementmittelachse (4.4), die beim Einsetzen des Federeinrastelements in die Nut im Wesentlichen rechtwinklig zur Profilschienenoberfläche orientiert ist. Die Federeinrastelementmittelachse und die Halterungselementmittelachse können in einem Winkel zueinander oder parallel zueinander orientiert sein.

In einer bevorzugten Ausgestaltung ist das Federeinrastelement unflexibel, also aus einem Vollmaterial gebildet, ausgestaltet. Vorteilhaft ergibt sich aus der Verwendung eines Vollmaterials, dass dieses stabiler ist als ein Element, dass beispielsweise zwei Klemmbacken umfasst, mit denen das Element in der Nut befestigt wird. Die Verwendung eines Vollmaterials erlaubt weiterhin vorteilhaft, dass das Element aus einem Stück gebildet ist und keine weiteren mechanischen Komponenten umfasst, welche einem Verschleiß unterliegen können. Vorteilhaft ist bei dieser Ausgestaltung ebenfalls, dass das Federeinrastelement in einem Prozessschritt, bspw. durch Spritzgießen oder 3D-Druck, insbesondere ohne aufwändige Nachbearbeitung erhalten werden kann.

Nach einer bevorzugten Ausgestaltung der Erfindung bildet das Federeinrastelement teilweise oder vollständig eine Kante (bspw. eine Längskante oder eine Breitenkante) des Halterungsschlittens aus.

Zwischen dem Halterungselement und dem Federeinrastelement ist bevorzugt ein Nutöffnungskantenauflagesteg (4.5) angeordnet. In einer besonders bevorzugten Ausführungsform erfolgt die Befestigung des Halterungsschlittens an der Profilschiene über das Federeinrastelement und den Nutöffnungskantenauflagesteg. Bei erfolgter Befestigung des Halterungsschlittens kontaktiert der Nutöffnungskantenauflagesteg eine Nutöffnungskante. Dabei kann der Nutöffnungskantenauflagesteg so ausgestaltet sein, dass seine Kontur der der Nutöffnungskante folgt. Beispielsweise kann die Kontur des Nutöffnungskantenauflagestegs der Kontur einer Fase der Nutöffnungskante folgen.

Der Nutöffnungskantenauflagesteg kann nicht exakt vom Federeinrastelement und dem Halteelement abgegrenzt werden. Im Wesentlichen umfasst der

Nutöffnungskantenauflagesteg den Bereich des Halterungsschlittens, welcher bei erfolgter Befestigung eine Nutöffnungskante kontaktiert. Der Nutöffnungskantenauflagesteg umfasst eine Nutöffnungskantenauflagesteglängsachse (3.8).

In einer Ausführungsform umfasst das Federeinrastelement im Querschnitt eine konvexe Wölbung, die distal zum Nutöffnungskantenauflagesteg angeordnet ist. Diese konvexe Wölbung wird auch als Federeinrastelementerhebung bezeichnet. Die konvexe Wölbung hat die Aufgabe als sogenannter Druckpunkt zu dienen, bei dessen Überwindung u.a. eine haptische Rückmeldung, wie unten beschrieben, erzeugt wird. Außerdem erlaubt eine solch konvexe Wölbung in Wirkverbundenheit mit einer konkaven Wölbung ein Arretieren/Fixieren des Federeinrastelements innerhalb der Nut.

In einer besonders bevorzugten Ausgestaltung umfasst die Nut im Querschnitt eine konkave Wölbung (2.1) und das Federeinrastelement eine konvexe Wölbung (4.6), wobei die Kreisbögen der konkaven Wölbung und die konvexen Wölbung im Wesentlichen den gleichen Mittelpunkt aufweisen, wenn das Federeirastelement im Nutenhohlraum platziert ist.

Für die Befestigung des Halterungselements an der Profilschiene wird das Federeinrastelement in die Nut eingeführt und partiell um den Mittelpunkt der Kreisbögen um eine Federeinrastelementlängsachse (4.7) gedreht, bis zumindest eine Nuteinrasterhebung (3.9, 3.11) in eine Federeinrastelementvertiefung (4.8, 4.10) reversibel formschlüssig und/oder kraftschlüssig eingreift. Die Federeinrastelementlängsachse muss nicht mit dessen geometrischen Zentrum (bezogen auf den Querschnitt des Federeinrastelements) zusammenfallen. Bei alternativen Ausführungsformen des Federeirastelements kann die Federeinrastelementlängsachse beispielsweise näher am Nutöffnungskantenauflagesteg als am geometrischen Zentrum des Federeinrastelements lokalisiert sein.

In einer bevorzugten Ausführungsform umfasst die Vorrichtung zum reversiblen Befestigen eines Halterungsschlittens an einer Profilschiene zumindest einen Halterungsschlitten und zumindest eine Profilschiene, wobei die Profilschiene zumindest eine Nut umfasst, wobei die Nut einen Nutenhohlraum, eine Nutentiefe, einen Nutengrund, eine Nutenbreite, eine Nutöffnung und zumindest eine Nutöffnungskante umfasst, wobei der Halterungsschlitten innerhalb der Nut anordenbar ist, wobei der Halterungsschlitten zumindest ein Halterungselement und zumindest ein dem Halterungselement gegenüber angeordnetes Federeinrastelement umfasst, wobei der Halterungsschlitten einen Nutöffnungskantenauflagesteg umfasst, wobei das Federeinrastelement innerhalb der Nut um eine Federeinrastelementlängsachse partiell rotierbar ist, wobei das Federeinrastelement mit der Nut reversibel verbindbar ist.

Gemäß einer weiter bevorzugten Ausführungsform umfasst die Vorrichtung zum reversiblen Befestigen eines Halterungsschlittens an einer Profilschiene zumindest einen Halterungsschlitten und zumindest eine Profilschiene, wobei die Profilschiene zumindest eine Nut umfasst, wobei die Nut einen Nutenhohlraum, eine Nutentiefe, einen Nutengrund, eine Nutenbreite, eine Nutöffnung und zumindest eine Nutöffnungskante umfasst, wobei der Halterungsschlitten innerhalb der Nut anordenbar ist, wobei der Halterungsschlitten zumindest ein Halterungselement und zumindest ein dem Halterungselement gegenüber angeordnetes Federeinrastelement umfasst, wobei der Halterungsschlitten einen Nutöffnungskantenauflagesteg umfasst, wobei das Federeinrastelement innerhalb der Nut um eine Federeinrastelementlängsachse partiell rotierbar ist, wobei das Federeinrastelement mit der Nut reversibel verbindbar ist, wobei zumindest eine Federeinrastelementvertiefung in Wirkverbundenheit mit zumindest einer Nuteinrasterhebung steht.

Gemäß einer weiter bevorzugten Ausführungsform umfasst die Vorrichtung zum reversiblen Befestigen eines Halterungsschlittens an einer Profilschiene zumindest einen Halterungsschlitten und zumindest eine Profilschiene, wobei die Profilschiene zumindest eine Nut umfasst, wobei die Nut einen Nutenhohlraum, eine Nutentiefe, einen Nutengrund, eine Nutenbreite, eine Nutöffnung und zumindest eine Nutöffnungskante umfasst, wobei der Halterungsschlitten innerhalb der Nut anordenbar ist, wobei der Halterungsschlitten zumindest ein Halterungselement und zumindest ein dem Halterungselement gegenüber angeordnetes Federeinrastelement umfasst, wobei der Halterungsschlitten einen Nutöffnungskantenauflagesteg umfasst, wobei das Federeinrastelement innerhalb der Nut um eine Federeinrastelementlängsachse partiell rotierbar ist, wobei das Federeinrastelement mit der Nut reversibel verbindbar ist, wobei zumindest eine Federeinrastelementvertiefung in Wirkverbundenheit mit zumindest einer Nuteinrasterhebung steht, oder wobei zumindest eine Federeinrastelementerhebung in Wirkverbundenheit mit einer Nutöffnungskante steht.

Bevorzugt weist das Federeinrastelement zumindest eine Vertiefung, insbesondere eine Federeinrastelementvertiefung (bspw. konkave Wölbungen), auf, während die Profilschiene zumindest eine Erhebung, insbesondere eine Nuteinrasterhebung (bspw. konvexe Wölbungen), insbesondere eine zu den Federeinrastelementvertiefungen komplementär ausgestaltete Erhebung bzw. Nuteinrasterhebung, aufweist. Dies hat wie hierin beschrieben u.a. den Vorteil der leichteren Reinigung der Nut. Darüber hinaus erlaubt eine solch Ausgestaltung der Wölbungen in Wirkverbundenheit mit einer komplementären Wölbung ein Arretieren/Fixieren des Federeinrastelements innerhalb der Nut der Profilschiene.

Gemäß einer weiter bevorzugten Ausführungsform umfasst die Vorrichtung zum reversiblen Befestigen eines Halterungsschlittens an einer Profilschiene zumindest einen Halterungsschlitten und zumindest eine Profilschiene, wobei die Profilschiene zumindest eine Nut umfasst, wobei die Nut einen Nutenhohlraum, eine Nutentiefe, einen Nutengrund, eine Nutenbreite, eine Nutöffnung und zumindest eine Nutöffnungskante umfasst, wobei der Halterungsschlitten innerhalb der Nut anordenbar ist, wobei der Halterungsschlitten zumindest ein Halterungselement und zumindest ein dem Halterungselement gegenüber angeordnetes Federeinrastelement umfasst, wobei der Halterungsschlitten einen Nutöffnungskantenauflagesteg umfasst, wobei das Federeinrastelement innerhalb der Nut um eine Federeinrastelementlängsachse partiell rotierbar ist, wobei das Federeinrastelement mit der Nut reversibel verbindbar ist, wobei zumindest eine Federeinrastelementvertiefung in Wirkverbundenheit mit zumindest einer Nuteinrasterhebung steht, wobei zumindest eine Federeinrastelementerhebung in Wirkverbundenheit mit einer Nutöffnungskante steht. Es ist dabei bevorzugt, dass das Federeinrastelement die Profilschiene, insbesondere eine Wandung (dem Fachmann auch als Begrenzungssteg bekannt) der Profilschiene, nicht umgreift und wobei im verbundenen Zustand die stabile und reversible Befestigung des Halterungsschlittens ausschließlich darüber erreicht ist, dass das Federeinrastelement in die Nut eingreift und der Nutöffnungskantenauflagesteg auf der Nutöffnungskante aufliegt.

Bevorzugt ist das Federeinrastelement als auch der Halterungsschlitten derart ausgestaltet, dass weder das Federeinrastelement noch ein anderer Teil des Halterungsschlittens die Profilschiene, insbesondere eine Wandung (dem Fachmann auch als Begrenzungssteg bekannt) der Profilschiene, umgreift. Der Nutöffnungskantenauflagesteg liegt bevorzugt auf der Nutöffnungskante auf, ohne diese zu umgreifen oder diese zumindest teilweise einzurahmen.

Bevorzugt weist der Halterungsschlitten genau ein Federeinrastelement auf. Dadurch kann erreicht werden, dass der Halterungsschlitten ohne ein Verkanten, bspw. durch am Halterungsschlitten übereinander oder anderweitig versetzt zueinander angeordnete Federeinrastelement, an der Profilschiene befestigt werden kann.

In einer weiteren Ausführungsform weist der Halterungsschlitten mehr als ein Federeinrastelement, insbesondere zumindest zwei oder genau zwei, vorzugsweise zumindest drei oder genau drei, ganz besonders bevorzugt zumindest vier oder genau vier Federeinrastelemente, auf, wobei jeder weitere der mehreren Federeinrastelemente auf einem Radius um die Federeinrastelementlängsachse neben einem weiteren Federeinrastelement angeordnet ist. So kann erreicht werden, dass der Halterungsschlitten im eingesetzten Zustand im Verhältnis zur Ausrichtung der Profilschiene, bspw. an einer gedachten Orthogonalen (Normalebene), die in Längsausrichtung zur Nut der Profilschiene ausgerichtet ist, in verschiedenen Winkelstellungen zur Profilschiene, bspw. zur gedachten Orthogonalen auf die Profilschiene in einer planparallelen Ausrichtung und/oder in einer zur Orthogonalen nach oben und/oder nach unten zu dieser abgewinkelten Ausrichtung, angeordnet werden kann. Beispielsweise lassen sich hierdurch Neigungswinkel von 0° (d.h. planparallele Ausrichtung des Halterungsschlittens zur Orthogonalen auf die Profilschiene), 25°, 50° und 75° einstellen.

Gemäß einer spezifischen Ausgestaltung, für den Fall, dass der Halterungsschlitten mehr als ein Federeinrastelement aufweist, sind die Federeinrastelement vorzugsweise in ihrer Form identisch zueinander ausgestaltet und unterscheiden sich lediglich in der vorbeschriebenen Winkelstellung.

In einer weiteren spezifischen Ausführungsform, für den Fall, dass der Halterungsschlitten mehr als ein Federeinrastelement aufweist, sind die Federeinrastelemente in ihrer Form nicht identisch zueinander ausgestaltet, sondern weisen unterschiedliche Bemaßungen auf. Somit kann erreicht werden, dass der Halterungsschlitten in unterschiedlichen Nuten befestigt werden.

Um zu erreichen, dass der Halterungsschlitten im eingesetzten Zustand im Verhältnis zur Ausrichtung der Profilschiene, bspw. an einer gedachten Orthogonalen (Normalebene), die in Längsausrichtung zur Nut der Profilschiene ausgerichtet ist, in verschiedenen Winkelstellungen angeordnet werden kann, ist nach einer weiterhin bevorzugten Ausgestaltung der Erfindung vorgesehen, dass die Nut der Profilschiene entlang des Nutengrunds und entsprechend des Nutenquerschnitts zumindest zwei aufeinanderfolgende Wölbungen, insbesondere direkt aufeinanderfolgende Wölbungen, d.h. in unmittelbarer Nachbarschaft zueinander, aufweist, welche vorzugsweise komplementär zu einer Wölbung auf dem Federeinrastelement des Halterungsschlittens ausgebildet sind. Hierdurch kann erreicht werden, dass bei einem bewussten Überdrehen des Federeinrastelements innerhalb der Nut, das Federeinrastelement kontrolliert aus einer ersten Position, die durch die Anordnung der ersten Wölbung entlang des Nutengrunds in proximaler Richtung zur Nutöffnungskante definiert ist, in eine zweite Position, die durch die Anordnung der zweiten Wölbung entlang des Nutengrunds in distaler Richtung zur Nutöffnungskante definiert ist, überführt werden kann. Vorzugsweise sind die Wölbungen derart ausgestaltet, dass diese derart in Wirkverbundenheit ineinandergreifen, dass ein Arretieren/Fixieren des Federeinrastelements innerhalb der Nut bzw. dem Nutenhohlraum der Profilschiene erfolgt. Der Fachmann versteht, dass neben den zwei aufeinanderfolgend angeordneten Wölbungen auch noch eine weitere, wie bspw. eine dritte oder vierte Wölbung, vorzugsweise von der proximalen Anordnung zur Nutöffnungskante in distale Richtung zur Nutöffnungskante auf dem Nutengrund, vorgesehen sein können, sodass sich durch Überführen der Wölbung auf dem Federeinrastelement des Halterungsschlittens von der ersten Wölbung zur zweiten Wölbung und ggf. zu jeder weiteren Wölbung entlang des Nutengrunds verschiedene Neigungswinkel einstellen lassen. Beispielsweise lassen sich hierdurch feinstufigere Neigungswinkel von 0° (d.h. planparallele Ausrichtung des Halterungsschlittens zur Orthogonalen auf die Profilschiene), 5°, 10° und 15° einstellen. In diesem Fall dient der Nutöffnungskantenauflagesteg vorzugsweise als Sicherung, der, insbesondere bei der Anordnung von schweren Gegenständen an der erfindungsgemäßen Vorrichtung, ein unerwünschtes Durchschlagen, bspw. Abklappen, des Halterungsschlittens innerhalb der Nut oder gar ein Herauslösen verhindert. Der Fachmann weiß, wie er die Wölbungen entsprechend der eingesetzten Materialien ausgestalten muss, um ein sicheres und/oder leichtgängiges Überführen der Wölbung auf dem Federeinrastelement von einer ersten Position in eine zweite und ggf. jede weitere Position als auch ein Arretieren/Fixieren des Federeinrastelements innerhalb der Nut bzw. dem Nutenhohlraum der Profilschiene zu gewährleisten. Es kann darüber hinaus vorgesehen sein, dass das Federeinrastelement zumindest eine zweite und/oder weitere Wölbung aufweist, die in ihrer Positionierung äquivalent und/oder äquidistant zu den Wölbungen des Nutengrunds der Profilschiene (wie hierin definiert) angeordnet sind. Hierdurch kann bei dem Eingreifen mehrerer Wölbungen ineinander die Wirkverbundenheit und damit ein Arretieren/Fixieren des Federeinrastelements innerhalb der Nut bzw. dem Nutenhohlraum der Profilschiene erhöht werden. Vorzugsweise weist der Nutengrund konvexe Wölbungen (bspw. Nuteinrasterhebungen) auf, welche vorzugsweise komplementär zu einer Wölbung, insbesondere einer konkaven Wölbung, auf dem Federeinrastelement des Halterungsschlittens ausgebildet ist. Unabhängig davon kann ebenfalls vorgesehen sein, dass das Federeinrastelement des Halterungsschlittens konvexe Wölbungen (bspw. Federeinrastelementerhebung) auf, welche vorzugsweise komplementär zu einer Wölbung, insbesondere einer konkaven Wölbung, auf dem Nutengrund der Profilschiene ausgebildet ist.

In einer bevorzugten Ausgestaltung ist das Federeirastelement als in den Halterungsschlitten einsteckbar ausgestaltet. Somit kann vorteilhaft erreicht werden, dass in den gleichen Halterungsschlitten Federeinrastelemente mit unterschiedlichen Formen und Abmessungen eingesetzt werden können, um diese in unterschiedlich ausgeformten oder bemaßten Nuten anzuordnen.

Dadurch, dass der Halterungsschlitten, insbesondere das Federeinrastelement, an der Profilschiene befestigt werden kann, ohne dass das Federeinrastelement oder ein anderer Teil des Halterungsschlittens die Profilschiene, insbesondere eine Wandung (dem Fachmann auch als Begrenzungssteg bekannt) der Profilschiene, umgreift, kann vorteilhaft erreicht werden, dass die Profilschiene bündig in einer Wand angeordnet sein kann und die Nut die einzige Unterbrechung in der Wandebene darstellt. So kann der Halterungsschlitten bspw. an einer Wand befestigt werden, welche eine Nut aufweist oder in welcher zumindest eine Nut angeordnet und/oder eingelassen ist, ohne dass dieses Begrenzungsstege, insbesondere freistehende Begrenzungsstege aufweist. Hiervon unabhängig kann in einem Begrenzungssteg, insbesondere in einem nicht freistehend ausgebildeten Begrenzungssteg, zumindest eine Schlittenarretierungsaussparung (wie hierin definiert) vorgesehen sein, wobei die Schlittenarretierungsaussparung vorzugsweise lediglich oberflächlich vorgesehen ist.

In einer bevorzugten Ausführungsform sind das Federeinrastelement und das Halterungselement um eine Federeinrastelementlängsachse rotierbar. Daraus ergibt sich, dass eine Bewegung auf einem, entlang um die Federeinrastelementlängsachse gedachten, Kreises auf der Seite des Halterungselements in eine Bewegung auf der Seite der Federeinrastelementlängsachse umgesetzt wird. Durch die Wahl des Abstandes zwischen dem Federeinrastelement und dem Halterungselement - wobei diese wie hierin beschrieben nicht klar voneinander abgegrenzt werden können, da sie Teil der gleichen baulichen Einheit, des Halterungsschlittens, sind - kann die Hebelwirkung beeinflusst werden, welche ursächlich dafür ist, dass der Druckpunkt überwunden wird. So kann mit einer größeren Hebelwirkung der Druckpunkt als schwerer überwindbar ausgestaltet werden.

Bevorzugt ist der Druckpunkt oder eine Erhebung so ausgestaltet, dass die Überwindung des Druckpunktes einzig durch die Elastizität des verwendeten Materials vorgegeben ist. Somit kann auf Öffnungen unterhalb der Federeinrastelementerhebung verzichtet werden, wodurch das Federeinrastelement stabiler ausgestaltet ist.

In einer weiter bevorzugten Ausführungsform weist die Vorrichtung zumindest eine Federeinrastelementvertiefung auf, die in einer weiter unten beschriebenen Wirkverbundenheit mit zumindest einer Nuteinrastergebung steht. Die Wirkungsweise ist die gleiche wie für die Federeinrastelementerhebung beschrieben, nur auf die Nuteinrasterhebung bezogen.

Unter einem formschlüssigen Eingriff (auch: Verbindung) des Federeinrastelements in eine Nut ist hierin zu verstehen, dass die Kante einer Federelementeinrastvertiefung und eine Nuteinrasterhebung als wirkverbundene Druckkontakte ausgestaltet sind. Bevorzugt sind die Abmessungen und Toleranzen des Federeinrastelements und der Nuteinrasterhebung so gewählt, dass eine manuelle Einführung des Halterungsschlittens in die Nut und dessen Drehung darin bis zum formschlüssigen Eingriff erfolgen kann. Aufgrund der gewählten Abmessungen erhält der Nutzer eine haptische Rückmeldung (auch: Feedback), sobald zumindest eine Nuteinrasterhebung in eine Federelementeinrastvertiefung eingreift, wenn ein Druckkontakt überwunden ist. In einer Ausführungsform ist ein Nutöffnungskantenauflagesteg so geformt, dass dieser zumindest eine Einrastvertiefung umfasst, in welche eine Nuteirasterhebung eingreifen kann. Dieser Eingriff wird weiter unten analog für zumindest eine Federelementeinrastvertiefung und zumindest einer Nuteinrasterhebung beschrieben.

Die haptische Rückmeldung kann auch erfolgen, wenn zumindest eine Federeinrastelementerhebung in Wirkverbundenheit mit einer Nutöffnungskante steht, wie weiter unten beschrieben ist.

Wie weiter unten beschrieben, kann es sich bei einer Erhebung auch um eine Vertiefung, insbesondere bei einer Federeinrastelementerhebung um eine Federeinrastelementvertiefung und bei einer Vertiefung auch um eine Erhebung, insbesondere bei einer Nuteinrastvertiefung um eine Nuteinrasterhebung handeln.

In einer Ausführungsform erlaubt die Form des Federeinrastelements oder des Nutöffnungskantenauflagestegs während der reversiblen Verbindung oder des Entfernens des Halterungsschlittens in oder aus der Nut eine haptische Rückmeldung. Die haptische Rückmeldung dient einem Nutzer der Vorrichtung als Information darüber, wann die reversible Befestigung des Halterungsschlittens an der Profilschiene erreicht ist. Dies kann auch noch über eine akustische Rückmeldung, bspw. ein hörbares Klicken, erfolgen.

Unter einer partiellen Rotation wird verstanden, wenn eine Rotation nur in einem begrenzten Bereich und nicht um 360° um einen Mittelpunkt, bspw. dem Mittelpunkt der Kreisbögen, erfolgen kann. Um bei bestimmungsgemäßem Gebrauch den Halterungsschlitten an der Profilschiene zu befestigen, wird das Federeinrastelement innerhalb der Nut positioniert und soweit um die Federeinrastelementlängsachse rotiert, bis der Nutöffnungskantenauflagesteg eine Nutöffnungskante kontaktiert. In einer Ausführungsform ist mit Beenden der partiellen Rotation eine reversibel formschlüssige Verbindung des Federeinrastelements mit der Nut, über ein oben beschriebenes Eingreifen zumindest einer Nuteinrasterhebung in eine Federeinrastelementvertiefung und/oder ein Kontaktieren der Nutöffnungskante, erreicht.

In einer bevorzugten Ausführungsform kann die Federeinrastelementmittelachse um 45° um die Federeinrastelementlängsachse rotiert werden. Je nach Ausgestaltung der weiter unten beschriebenen Nuteinrasterhebungen und Federeinrastelementvertiefungen sind auch davon abweichende Winkelmaße möglich und nicht auf eine 45° Rotation beschränkt.

In einer Ausführungsform umfasst das Federeinrastelement eine Federeinrastelementoberseite, die durch eine Federeinrastelementoberkante von der konvexen Wölbung abgegrenzt ist.

In einer bevorzugten Ausgestaltung umfasst das Federeinrastelement eine Federeinrastelementoberseite (4.11) sowie eine Federeinrastelementunterseite (4.12), welche zueinander bevorzugt parallel angeordnet sind. Es kann auch gewünscht sein, dass die Federeinrastelementoberseite im Querschnitt bspw. eine konkave Wölbung aufweist, oder andersartig ausgestaltet ist.

Die Federeinrastelementoberseite kann im Querschnitt gewölbt (konkav) ausgestaltet sein, womit sich vorteilhaft eine Material- und Gewichtsersparnis ergibt. Alternativ oder in Kombination zu der konkav gewölbten Federeinrastelementoberseite kann auch die Federeinrastelementunterseite gleichartig gewölbt ausgestaltet sein.

In einer bevorzugten Ausführungsform ist die Dicke des Federeinrastelements geringer als die Nutöffnungsbreite. Dies ermöglicht ein widerstandsfreies Einführen des Federeinrastelements in die Nut.

Um bei bestimmungsgemäßem Gebrauch das Federeinrastelement widerstandsfrei in die Nut einzuführen ist es vorteilhaft, wenn die Dicke des Federeinrastelements, also der Abstand zwischen der Federeinrastelementoberseite und der Federeinrastelementunterseite geringer ist als die Nutöffnungsbreite. Bevorzugt ist die Dicke des Federeinrastelements um zumindest 15%, besonders bevorzugt um zumindest 12% und ganz besonders bevorzugt um zumindest 10% und weiter besonders bevorzugt um zumindest 5% geringer ausgestaltet als die Nutöffnungsbreite. Vorteilhaft ergibt sich dadurch beim Einführen des Federeinrastelements ein geringes Spiel zwischen dem Federeinrastelement und dem Material der Profilschiene.

Es kann auch gewünscht sein, dass die Dicke des Federeinrastelements der Abmessung der Nutöffnungsbreite entspricht oder größer als diese ist. Um dennoch eine widerstandsfreie Einführung des Federeinrastelements in die Nut zu ermöglichen, kann das Federeinrastelement aus einem Material bestehen, welches sich in einem abgekühlten Zustand so weit zusammenzieht, so dass das Federeinrastelement widerstandsfrei durch die Nutöffnung in den Nutenhohlraum geführt werden kann. In erwärmten Zustand, wobei die Temperatur bevorzugt der Umgebungstemperatur (bspw. der Raumtemperatur) entspricht, kann sich das Federeinrastelement ausdehnen und den Halterungsschlitten temperaturabhängig formschlüssig mit der Profilschiene verbinden. Vorteilhaft kann damit erreicht werden, dass das Federeinrastelement im abgekühlten Zustand nicht aus der Nut entnommen werden kann.

In einer bevorzugten Ausführungsform ist die Dicke des Nutöffnungskantenauflagestegs geringer als die Dicke der Federeinrastelements. Hierdurch wird vorteilhaft die partielle Rotation vereinfacht oder überhaupt erst ermöglicht. Dabei kann die Dicke des Nutöffnungskantenauflagestegs der Dicke des Halterungselements entsprechen, oder geringer als diese ausgestaltet sein. Bevorzugt ist die Dicke des Halterungselements um zumindest 50%, besonders bevorzugt um zumindest 60% und ganz besonders bevorzugt um zumindest 65% geringer als die Dicke des Federeinrastelements. Der Fachmann wird die Dicke des Nutöffnungskantenauflagestegs nach den geforderten Ansprüchen an dessen Stabilität auswählen. Weiterhin dann der Fachmann die Dicke des Halterungselements ebenso an die geforderten Ansprüche an die Stabilität des Halterungselements anpassen.

In einer Ausführungsform kann die Dicke des Nutöffnungskantenauflagestegs der Breite des Federeinrastelements entsprechen. Beispielsweise kann der Halterungsschlitten als ein gewinkeltes Element ausgestaltet sein. Es ist auch denkbar, dass die Dicke des Nutöffnungskantenauflagestegs größer ist als die Dicke des Federeinrastelements. Dieses kann auch so ausgestaltet sein, dass es keine Federeinrastelementvertiefungen umfasst. Der Nutöffnungskantenauflagesteg, welcher zumindest eine Einrastelementvertiefung umfassen kann, kann auf einer Nutöffnungskante platziert werden. Das Federeinrastelement begrenzt hierbei die partielle Rotation durch ein Kontaktieren entweder einer Nuteinrasterhebung oder durch ein Kontaktieren einer bspw. konkav ausgeformten Nutöffnungskante, so dass der als gewinkeltes Element ausgestaltete Halterungsschlitten somit in der Nut befestigt werden kann.

Demnach ist die Dicke des Nutöffnungskantenauflagestegs geringer, gleich oder größer als die Dicke des Federeinrastelements. Mit einer geringeren Dicke kann Material eingespart werden. Eine größere Dicke erlaubt eine größere Stabilität. Dies ist insbesondere dann von Vorteil, wenn die oben beschriebene Hebelwirkung groß ist. So kann einem Bruch des Halterungsschlittens zwischen Federeinrastelement und Halterungselement vorgebeugt werden.

Das Federeinrastelement umfasst zumindest eine erste Federeinrastelementvertiefung (4.8), die in Wirkverbundenheit mit einer ersten Nuteinrasterhebung (3.9) steht. Bei bestimmungsgemäßem Gebrauch wird das Federeinrastelement innerhalb der Nut so weit rotiert, bis der Nutkantenöffnungsauflagesteg die Nutöffnungskante kontaktiert und/oder zumindest eine erste Nuteinrasterhebung in zumindest eine erste Federeinrastelementvertiefung eingreift. In einer bevorzugten Ausgestaltung umfasst die Nut zumindest eine Nuteinrasterhebung und das Federeinrastelement zumindest eine Federeinrastelementvertiefung. Der Fachmann weiß, dass diese beiden Elemente in einer alternativen Ausführungsform auch invertiert vorliegen können. Also so, dass die Nut zumindest eine Nuteinrastvertiefung und das Federelement zumindest eine Federeinrastelementerhebung umfasst. Weiterhin sind Kombinationen in der Art denkbar, als dass die Nut sowie auch das Federeinrastelement zumindest eine Vertiefung und zumindest eine Erhöhung umfasst. In einer weiteren Ausführungsform können auch keine Nuteinrasterhebungen und/oder Federeinrastelementvertiefungen vorhanden sein. Zudem kann eine Erhebung als eine Vertiefung und umgekehrt ausgestaltet sein.

In einer bevorzugten Ausgestaltung ist eine erste Federeinrastelementvertiefung proximal zum Nutöffnungskantenauflagesteg angeordnet. Als proximal wird hierin verstanden, wenn ein Punkt zu einem Bezugspunkt eine geringere Entfernung aufweist als ein Punkt, der weiter vom Bezugspunkt entfernt, also distal, liegt. Beispielsweise kann ein Punkt auf halber Strecke des Radius eines Kreises als proximal zum Mittelpunkt des Kreises angegeben werden, wohingegen ein Punkt auf dem Umfang des Kreises als zum Mittelpunkt distal liegend verstanden werden kann.

Hierin soll als Bezugspunkt für die Angabe distal/proximal der Nutöffnungskantenauflagesteg, bzw. die Nutöffnungskantenauflagesteglängsachse herangezogen werden. In einer bevorzugten Ausführungsform ist die erste Federeinrastelementvertiefung proximal zum Nutöffnungskantenauflagesteg angeordnet, wobei eine erste Nuteinrasterhebung ebenso proximal zum Nutöffnungskantenauflagesteg orientiert ist.

In einer bevorzugten Ausführungsform ist die erste Nuteinrasterhebung, welche proximal zum Nutöffnungskantenauflagesteg orientiert ist, in die erste Federeinrastelementvertiefung formschlüssig eingreifbar. Daraus ergibt sich ein hierin definiertes haptisches Feedback.

Die Bezeichnungen "erste", "zweite", "dritte" und die mit diesen äquivalente Begriffe sind frei gewählt und dienen der Klarheit der Beschreibung, insbesondere der Definition der Positionsangaben der Nuteinrasterhebungen und Federeinrastelementvertiefungen.

In einer Ausführungsform umfasst die Nut zumindest eine erste Nuteinrasterhebung und/oder eine zweite Nuteinrasterhebung, die sich gegenüber angeordnet und durch den Nutenhohlraum voneinander abgegrenzt sind. Die Nuteinrasterhebungen erlauben den wirkverbundenen Eingriff der Federeinrastelementerhebungen in diese, um u.a. die haptische Rückmeldung zu erlauben.

Eine zweite Nuteinrasterhebung (3.10) kann der ersten Nuteinrasterhebung direkt gegenüber angeordnet sein, wobei diese von der ersten Nuteinrasterhebung durch den Nutenhohlraum voneinander abgegrenzt ist. Die zweite Nuteinrasterhebung ist somit distal zum Nutöffnungskantenauflagesteg / der Nutöffnungskantenauflagesteglängsachse angeordnet.

In einer bevorzugten Ausgestaltung umfasst das Federeinrastelement eine konvexe Wölbung (4.6), die distal zum Nutöffnungskantenauflagesteg angeordnet ist. Diese Wölbung kann, muss aber nicht, den gleichen Krümmungsgrad/ die gleiche Krümmung aufweisen, wie die konkave Wölbung der Nut. Vorteilhaft ergibt sich durch die gleiche Krümmung, dass das Federeinrastelement mit geringem Spiel innerhalb der Nut rotierbar ist. Unter einer gleichen Krümmung wird hierbei verstanden, dass die Teilkreise, welchen die konvexen oder konkaven Wölbungen folgen, konzentrisch sind und sich deren Durchmesser möglichst wenig voneinander unterscheiden, so dass sich vorteilhaft ein nur geringes Spiel zwischen dem Federeinrastelement und der Nut ergibt.

Bei einer kreisförmigen Ausgestaltung der Nut kann deren Querschnitt als Kreisfläche verstanden werden, deren Zentrum im Wesentlichen mit dem geometrischen Zentrum des Federeinrastelements, oder der Federeinrastelementlängsachse zusammenfällt. Der Durchmesser der Kreisfläche entspricht dabei im Wesentlichen der Nutenbreite. Die zumindest eine Nuteinrasterhebung oder die Nuteinrasterhebungen ist / sind im Wesentlichen entlang des Umfangs der Kreisfläche der Nut angeordnet. Hierin soll das Nutöffnungszentrum (3.12), positioniert auf der halben Breite der Nutöffnungsbreite, auf der Kreisfläche den Winkel 0° definieren. Die erste Nuteinrasterhebung ist bevorzugt in einem Winkelbereich zwischen 50° und 95°, besonders bevorzugt zwischen 70° und 85° und ganz besonders bevorzugt bei 78° angeordnet.

Eine zweite Nuteinrasterhebung kann der ersten Nuteinrasterhebung im Wesentlichen gegenüber angeordnet sein. Dabei ist die zweite Nuteinrasterhebung auf dem Umfang der Kreisfläche in einem Winkelbereich von bevorzugt zwischen 265° und 310°, besonders bevorzugt zwischen 275° und 290° und ganz besonders bevorzugt bei 282° angeordnet. Die Position der zweiten Nuteinrasterhebung kann als distal zum Nutöffnungskantenauflagesteg / der Nutöffnungskantenauflagesteglängsachse bezeichnet werden.

In einer weiteren Ausführungsform kann die Nut eine dritte Nuteinrasterhebung (3.11) umfassen, welche auf dem Umfang der Kreisfläche in einem Winkelbereich von bevorzugt zwischen 160° und 220°, besonders bevorzugt zwischen 190° und 210° und ganz besonders bevorzugt bei 180° angeordnet ist. Durch das Vorhandensein einer dritten Nuteinrasterhebung ergibt sich vorteilhaft, dass das Spiel zwischen Federeinrastelement und Nut reduziert ist. Die dritte Nuteinrasterhebung kann in eine optional vorhandene dritte Federeinrastelementvertiefung (4.10) eingreifen, welche distal zum Nutöffnungskantenauflagesteg / der Nutöffnungskantenauflagesteglängsachse angeordnet ist. Die dritte Nuteinrasterhebung ist im Wesentlichen am tiefsten Punkt der Nutentiefe, dem Nutengrund (3.3) angeordnet. Weiterhin vorteilhaft an einer Anordnung der Nuteinrasterhebung bei einem Winkel von 180° ist, dass das Federeinrastelement auch invertiert (spiegelverkehrt) in der Nut befestigt werden kann.

In einer bevorzugten Ausführungsform umfasst die Nut eine dritte Nuteinrasterhebung, die zu der ersten Nuteinrasterhebung und der zweiten Nuteinrasterhebung beabstandet ist und am Nutengrund angeordnet ist. Durch die dritte Nuteinrasterhebung wird ein hierin beschriebenes haptisches Feedback ermöglicht.

In einer abgewandelten Ausführungsform kann die dritte Nuteinrasterhebung in einem kleineren Winkel als 180° (bspw. bei 160°) angeordnet sein, während eine vierte Nuteinrasterhebung in einem Winkel größer als 180° (bspw. bei 200°) angeordnet ist. Vorteilhaft ergibt sich dadurch, dass das Federeinrastelement auch invertiert in der Nut befestigt werden kann und zusätzlich stabilisiert wird.

Weitere, von den oben angegebenen Winkelbereichen und Winkeln abweichende Winkelbereiche und Winkel sind möglich. Ebenso können die Anzahl der Nuteinrasterhebungen und Federeinrastelementvertiefungen variiert werden. Beispielsweise können zusätzliche Nuteinrasterhebungen / Federeinrastelementvertiefungen vorteilhaft einer zusätzlichen Stabilität des Halterungsschlittens innerhalb der Nut dienen.

Weiter vorteilhaft können weitere Nuteinrasterhebungen und Federelementvertiefungen zusätzliches haptisches Feedback ermöglichen. Mit einer zunehmenden Anzahl an Nuteinrasterhebungen und Federelementvertiefungen können diese mit einer geringeren Höhe ausgestaltet werden. Gleichzeitig wird durch weitere Nuteinrasterhebungen und Federelementvertiefungen eine bessere kraftschlüssige Verbindung des Federeinrastelements innerhalb der Nut ermöglicht.

Bei bestimmungsgemäßem Gebrauch wird das Federeinrastelement so in die Nut eingeführt, oder aus dieser entfernt, indem die Federeinrastelementmittelachse auf dem Umfang der Kreisfläche der Nut bei etwa 0° angeordnet ist, welches dem Einführwinkel des Federeinrastelements entspricht. Dabei kann der Winkelbereich des Einführwinkels auch davon abweichen. Beispielsweise kann der Einführwinkel einen Bereich von 340° und 20° umfassen, wobei der Bereich des Einführwinkels von der Ausgestaltung des Federeinrastelements, insbesondere der Dicke des Federeinrastelements, als auch der Nutöffnungsbreite abhängig ist.

Das Federeinrastelement kann eine Federeinrastelementoberkante (4.11) umfassen, welche die Federelementoberseite von der konvexen Wölbung des Federelements abgrenzt. Die Federeinrastelementoberkante ist dazu eingerichtet, die zweite Nuteinrasterhebung zu kontaktieren, um die partielle Rotation des Federeinrastelements um die Federeinrastelementlängsachse zu begrenzen. Die Federeinrastelementoberkante kann als eine zweite Federelementeinrastvertiefung ausgestaltet sein, so dass die zweite Nuteinrasterhebung in diese eingreifen kann.

In einer Ausführungsform umfasst das Federeinrastelement eine zweite Federeinrastelementvertiefung, oder die Federeinrastelementoberkante ist als eine zweite Federeinrastelementvertiefung ausgestaltet. Mit einer größeren Anzahl der Federeinrastelementvertiefungen oder der Federeinrastelementerhebungen wird eine stabilere reversible Befestigung des Federeinrastelements innerhalb der Nut sowie ein Bereitstellen von weiteren Druckpunkten für die haptische Rückmeldung erreicht.

In einer weiteren Ausführungsform ist die zweite Nuteinrasterhebung in die zweite Federeinrastelementvertiefung formschlüssig eingreifbar. Daraus ergibt sich einerseits ein zusätzliches hierin definiertes haptisches Feedback sowie eine stabilere kraftschlüssige Verbindung des Federeinrastelements mit der Nut.

In einer weiteren Ausführungsform grenzt eine dritte Federeinrastelementvertiefung die konvexe Wölbung des Federeinrastelements von der Federeinrastelementunterseite ab und kann als eine Federelementunterkante ausgestaltet sein.

In einer Ausführungsform umfasst das Federeinrastelement eine dritte Federeinrastelementvertiefung, die distal zum Nutöffnungskantenauflagesteg angeordnet ist und die konvexe Wölbung von einer Federeinrastelementunterseite abgrenzt.

In einer bevorzugten Ausführungsform ist die dritte Nuteinrasterhebung in die dritte Federeinrastvertiefung formschlüssig eingreifbar. Dies ermöglicht einerseits ein zusätzliches hierin definiertes haptisches Feedback und andererseits eine stabilere kraftschlüssige Verbindung des Federeinrastelements innerhalb der Nut.

Eine oder mehrere Federelementeinrastelementvertiefungen können auch als Federelementeinrasterhebungen (5.1, 5.2, 5.3) ausgestaltet sein und in Nuteinrastvertiefungen (6.1, 6.2, 6.3) eingreifen. Um ein Eingreifen einer Federelementeinrasterhebung in eine Nuteinrastvertiefung zu ermöglichen, kann die Federeinrastelementerhebung bspw. über eine Spannfeder (7.0) in dem Federeinrastelement gelagert sein, so dass die Spannfeder der Federelementeinrasterhebung beim Einführen in die Nut gespannt wird und sich beim Erreichen der Nuteinrastvertiefung entspannt, wodurch die Federelementeinrasterhebung in die Nuteinrastvertiefung gedrückt wird und so eine formschlüssige Verbindung des Halterungsschlittens mit der Profilschiene etabliert.

In davon abgewandelten Ausführungsformen können zumindest eine oder alle Nuteinrastvertiefungen als Nuteinrasterhöhungen und/oder zumindest eine oder alle Federelementeinrastvertiefungen als Federelementeinrasterhöhungen ausgestaltet sein und eine Spannfeder umfassen. Statt einer Spannfeder kann auch beispielsweise ein Metallbügel verwendet werden. Vorteilhaft hierbei ist, dass weniger Teile verwendet werden müssen und die Vorrichtung somit verschleißärmer ist.

In einer bevorzugten Ausführungsform ist die Nutöffnungskantenauflagesteglängsachse (3.8) parallel zur Nutöffnungskante (3.7) anordenbar. Daraus ergibt sich, dass das Federeinrastelement in die Nut eingeführt werden kann und insbesondere widerstandsfrei eingeführt werden kann.

In einer bevorzugten Ausführungsform ist der Nutöffnungskantenauflagesteg in Kontaktierung zur Nutöffnungskante bringbar, wobei die Kontaktierung eine Begrenzung der partiellen Rotation darstellt.

In einer bevorzugten Ausführungsform ist die zweite Nuteinrasterhebung, welche distal zum Nutöffnungskantenauflagesteg orientiert ist, in Kontaktierung zur Federeinrastelementoberkante bringbar, wobei die Kontaktierung eine Begrenzung der partiellen Rotation darstellt.

Um bei bestimmungsgemäßem Gebrauch das Federeinrastelement in die Nut einzuführen ist die Nutöffnungskantenauflagesteglängsachse parallel zur Nutöffnungskante angeordnet. Um den Halterungsschlitten, also das Federeinrastelement mit der Nut formschlüssig zu verbinden, ist vorgesehen, dass das Federeinrastelement um die Federeinrastelementlängsachse rotiert wird, bis zumindest eine Nuteinrasterhebung in zumindest eine Federeinrastvertiefung eingreift. Die partielle Rotation des Federeinrastelements um die Federeinrastelementlängsachse hat zur Folge, dass sich der Winkel zwischen der Halterungselementmittelachse und dem weiter oben definierten Winkel von 0°, welcher das Nutöffnungszentrum markiert, verringert. Bei bestimmungsgemäßem Gebrauch ist die partielle Rotation beendet, wenn der Nutöffnungskantenauflagesteg die Nutöffnungskante kontaktiert und/oder zumindest eine Nuteinrasterhebung in eine Federelementeinrastvertiefung formschlüssig eingreift. In einer Ausführungsform greift die proximal zum Nutöffnungskantenauflagesteg liegende erste Nuteinrasterhebung in die erste Federelementeinrastvertiefung ein, während eine distal zum Nutöffnungskantenauflagesteg angeordnete zweite Nuteinrasterhebung die Federeinrastelementoberkante kontaktiert. Dafür muss diese keine Federeinrastelementvertiefung umfassen. Die Begrenzung der partiellen Rotation ist dann dadurch gegeben, dass sich die Federeinrastelementoberkante nicht über die zweite Nuteinrasterhebung hinausbewegen kann. In einer weiteren Ausgestaltung ist die Federeinrastelementoberkante als eine zweite Federeinrastelementvertiefung (4.9) ausgestaltet, wobei die zweite Nuteinrasterhebung in diese eingreift. Dabei kann die zweite Federeinrastelementvertiefung so ausgestaltet sein, dass durch das Engreifen ein Druckpunkt überwunden wird, um eine haptische Rückmeldung zu bewirken.

Gemäß einer bevorzugten Ausführungsform umfasst das Material der Profilschiene und/oder des Halterungsschlittens ein Metall, oder einen Kunststoff, oder ein Glas, oder eine Keramik, oder einen Verbundwerkstoff, oder ein Holz oder eine Kombination aus zumindest einem der genannten.

Das Material der Profilschiene und/oder des Halterungsschlittens kann ein Metall (z.B. Aluminium, Kupfer, Eisen, Zink, Magnesium, Vanadium, Titan oder Legierungen davon sowie Legierungen mit weiteren Elementen, wie Kohlenstoff, Sauerstoff, Stickstoff, Mangan, Chrom, Nickel) umfassen. Weiterhin kann das Material einen Kunststoff, bevorzugt einen Thermoplasten (z.B. Polyolefine, Polyamide, Polyester, Polyacetale, Polyacetate, Polyurethane) umfassen. Weiterhin bevorzugt kann als Material ein Kunststoff verwendet werden, der vorteilhaft temperaturbeständig (z.B. schwer entflammbar) und/oder chemikalienbeständig (z.B. gegen aggressive Chemikalien wie Säuren und/oder Laugen resistent) ist. Ein erfindungsgemäßes Material kann lackiert sein. Insbesondere kann ein Metall eloxiert sein oder mit eisenhaltigen Materialien brüniert sein, so dass das Material/Metall einen erhöhten Korrosionsschutz, bspw. durch korrodierende Substanzen (z.B. Säuren, Laugen) aufweist.

Dem Fachmann ist eine Vielzahl an Materialien, insbesondere Metalle, bekannt, welche als Material für Profilschienen oder Halterungsschlitten verwendet werden können.

Denkbar ist auch, dass das Material ein Glas oder eine Keramik (z.B. Borosilikatglas, Aluminiumoxidkeramik) oder einen Verbundwerkstoff umfasst. Aus der Verwendung eines Glases ergibt sich vorteilhaft eine hohe Beständigkeit gegenüber Temperaturen sowie aggressiven Chemikalien wie etwa Säuren oder Laugen. Weiterhin kann ein Material auch ein Hartz (z.B. Epoxidharz), oder ein Holz (z.B. Ahorn, Kiefer, Buche) umfassen. Ein Material kann auch mehrschichtig aufgebaut sein. Beispielsweise kann ein Halterungsschlitten einen Metallkern, der von einem Kunststoff ummantelt ist, umfassen. Vorteilhaft kann der Metallkern die Stabilität der Vorrichtung erhöhen.

In einer Ausführungsform ist das Material der Profilschiene mehrschichtig aufgebaut. Ein mehrschichtiger Aufbau kann zudem auch als Beschichtung verstanden werden. So ist denkbar, dass die Profilschiene aus einem oben definierten Metall gebildet ist, welches mit einem Kunststoff beschichtet ist. Dadurch kann bspw. eine Korrosion des Metalls verhindert werden. Die Profilschiene, insbesondere die Nut, kann auch mit einem reibungsarmen Kunststoff wie etwa Polytetrafluorethylen beschichtet sein, um vorteilhaft ein Gleiten des Federeinrastelements innerhalb der Nut zu ermöglichen.

In einer Ausführungsform ist das Federeinrastelement und der Nutöffnungskantenauflagesteg aus einem Metall gefertigt, während das Halterungselement aus einem Kunststoff gefertigt ist. Ein aus Metall gefertigtes Federeinrastelement und ein aus Metall gefertigter Nutöffnungskantenauflagesteg erhöhen vorteilhaft die Stabilität des Halterungsschlittens. In einer weiteren Ausführungsform kann der Halterungsschlitten insgesamt aus einem Metall gefertigt sein, woraus sich der gleiche Vorteil ergibt.

In einer Ausführungsform umfasst die Profilschiene und/oder der Halterungsschlitten zumindest ein magnetisches Element. Verschiedene magnetische Elemente sind dem Fachmann hinreichend bekannt. So kann es sich bei einem magnetischen Element beispielsweise um einen Permanentmagneten handeln, oder auch um ein Material (z.B. ein Metall) an welchem der Permanentmagnet haftet. Zusätzlich zu einer, durch das Eingreifen zumindest einer Nuteinrasterhebung in zumindest eine Federeinrastvertiefung etablierten, formschlüssigen Verbindung kann zumindest ein magnetisches Element zusätzlich eine kraftschlüssige Verbindung des Halterungsschlittens mit der Profilschiene erlauben. Vorteilhaft ergibt sich dadurch, dass der Halterungsschlitten mit der Profilschiene kraftschlüssig verbunden werden kann. Dies kann beispielsweise dann gewünscht sein, wenn verschiedene Halterungsschlitten auf Vorrat an der Profilschiene angeordnet werden sollen, ohne dass die Halterungsschlitten innerhalb der Nut befestigt werden. So ist auch denkbar, dass die Halterungsschlitten an einem flächigen Metallelement, beispielsweise einer Metallwand, haften können, bis sie benötigt werden.

In einer Ausgestaltung ist entlang der Nutöffnungskante ein magnetisches Element eingelassen, während der Nutöffnungskantenauflagesteg und/oder das Halterungselement ein weiteres magnetisches Element umfasst. Vorteilhaft kann somit ein ungewolltes Verrutschen des Halterungsschlittens innerhalb der Nut verhindert werden, wobei weiterhin vorteilhaft eine gewünschte manuelle Bewegung dennoch ermöglicht ist.

Ein magnetisches Element kann auch von einem Federeinrastelement umfasst sein. Die Anordnung zumindest eines magnetischen Elements an oder in dem Federeinrastelement hat den Vorteil, dass das Federeinrastelement mit der Federeinrastelementoberseite oder der Federeinrastelementunterseite an der Profilschiene angelegt werden kann, um eine magnetische Verbindung herzustellen, wodurch ein Verrutschen des Federeinrastelements an der Profilschiene oder innerhalb der Nut verhindert wird.

In einer Ausführungsform weist die Profilschiene und/oder der Halterungsschlitten ein reibungsverringerndes Mittel oder ein reibungserhöhendes Mittel auf. Diesbezügliche Vorteile sind weiter unten beschrieben.

In einer Ausführungsform umfasst die Profilschiene und/oder der Halterungsschlitten zumindest ein reibungsverringerndes Mittel, welches dazu eingerichtet ist, die Reibung zwischen dem Halterungsschlitten und der Profilschiene zu reduzieren. Im Sinne der Erfindung kann ein reibungsverringerndes Mittel beispielsweise ein Kugellager, Radlager, oder Walzenlager umfassen. So kann die Nut zumindest eine Nutführungsschiene und das Federeinrastelement zumindest ein Kugellager, Radlager oder Walzenlager umfassen, dessen bewegliche Elemente innerhalb der Nutführungsschiene anordenbar und darin führbar sind. Dabei kann der Fachmann die Anordnung der Nutführungsschiene und die Anordnung der Kugel-, Rad-, oder Walzenlager so wählen, dass eine optimale reibungsarme Bewegung des Halterungsschlittens bei dessen Belastung durch ein Gewicht ermöglicht wird. Vorteilhaft ergibt sich daraus, dass der Halterungsschlitten auch bei starker Belastung durch ein Gewicht, reibungsarm innerhalb der Nut entlang der Profilschiene führbar ist.

In einer dazu alternativen Ausführungsform kann die Profilschiene und/oder der Halterungsschlitten ein reibungserhöhendes Mittel umfassen. So können innerhalb der Nut und/oder entlang der Nutöffnungskante Gummilippen eingelassen sein, die sich entlang der Längsachse der Nut erstrecken. Alternativ dazu eignen sich auch Kunststoffe, z.B. Thermoplaste oder Elastomere. Vorteilhaft kann somit ein ungewolltes Verrutschen des Halterungsschlittens innerhalb der Nut verhindert werden, wobei weiterhin vorteilhaft eine gewünschte manuelle Bewegung ermöglicht ist. Insbesondere bei Belastung des Halterungsschlittens mit einem Gewicht wird der Halterungsschlitten fester gegen das reibungserhöhende Material gedrückt, so dass ein ungewolltes Verrutschen vorteilhaft weiter verhindert wird.

Die Profilschiene und/oder der Halterungsschlitten kann stattdessen auch ein reibungsverringerndes Material umfassen. So kann der Halterungsschlitten, insbesondere das Federeinrastelement und/oder der Nutöffnungskantenauflagesteg, einen reibungsarmen Kunststoff (z.B. Polytetrafluorethylen (PTFE)) umfassen. Vorteilhaft kann dadurch der Halterungsschlitten, auch wenn er mit einem Gewicht belastet ist, leichter innerhalb der Nut entlang der Länge der Profilschiene bewegt werden. **PTFE** ist besonders vorteilhaft, da es sich um ein sehr reaktionsträges Material handelt, welches säure- und laugenfest ist und sich daher die Verwendung insbesondere im chemischen oder biologischen Laborbetrieb eignet.

Ein reibungserhöhendes Mittel ermöglicht vorteilhaft, dass das Federeinrastelements nicht innerhalb der Nut verrutschen kann. So kann die Nut auch in einem beliebigen Winkel im Raum orientiert sein.

Aus dem gleichen Grund umfasst das Material der Profilschiene und/oder das Federeinrastelements gemäß einer Ausführungsform ein reibungserhöhendes Material, oder eine reibungserhöhende Beschichtung mit einem reibungserhöhenden Material wie etwa einem reibungserhöhenden Kunststoff oder einem Gummi.

In einer alternativen Ausführungsform kann die Profilschiene zumindest eine Schlittenarretierungsaussparung (2.3) umfassen. Dabei handelt es sich im Wesentlichen um eine Aussparung, die innerhalb der Profilschienenoberfläche angeordnet ist. Eine Schlittenarretierungsaussparung ist bevorzugt parallel zu einer gleichartig gestalteten Schlittenarretierungsaussparung angeordnet. Entlang der Nutöffnungskante können mehrere Schlittenarretierungsaussparungen in gleichen oder ungleichen Abständen angeordnet sein. Eine Schlittenarretierungsaussparung kann mit dem Nutenhohlraum fluidverbunden sein. Bei dieser oder einer davon abweichenden Ausführungsform kann der Halterungsschlitten zumindest einen Schlittenarretierungsvorsatz (4.14) umfassen, welcher so ausgestaltet sein kann, dass dieser in die Schlittenarretierungsaussparung eingreift, wodurch sich eine zusätzliche formschlüssige Verbindung ergibt. Vorteilhaft kann somit ein ungewolltes Verrutschen des Halterungsschlittens innerhalb der Nut verhindert werden, wobei weiterhin vorteilhaft eine gewünschte manuelle Bewegung ermöglicht ist, indem der Schlittenarretierungsfortsatz für die Dauer der manuellen Bewegung aus der Schlittenarretierungsaussparung gehoben wird.

Vorzugsweise ist die Schlittenarretierungsaussparung an einer Position der Profilschiene vorgesehen, die bei bestimmungsgemäßem Gebrauch der Vorrichtung unterhalb der Nut, d.h. zum Schwerkraftzentrum hin, angeordnet ist, wodurch vorteilhaft das Gewicht eines an dem Halteschlitten angeordneten Gegenstands, insbesondere bei schweren Gegenständen, aufgenommen und/oder abgeleitet werden kann.

Kombinationen von reibungsverringernden Mitteln, reibungserhöhenden Mitteln, oder reibungserhöhenden Materialien sind denkbar und nicht auf die hier genannten beschränkt Der Fachmann kann die hier oben genannten Mittel entsprechend abwandeln. Dies gilt insbesondere für die Art der verwendeten Kunststoffe.

Bei bestimmungsgemäßem Gebrauch erfolgt die weiter oben beschriebene partielle Rotation bis zu einer Feststellposition des Federeinrastelements. Die Feststellposition ist als die Position definiert, bei welcher zumindest eine Nuteinrasterhebung in zumindest eine Federeinrastelementvertiefung formschlüssig eingreift und/oder ein Nutöffnungskantenauflagesteg eine Nutöffnungskante kontaktiert.

Die erfindungsgemäße Vorrichtung kann für verschiedenste Anwendungen verwendet werden. Eine bevorzugte Anwendung der Vorrichtung erfolgt als Halterungssystem (8.0) für unterschiedliche Gegenstände im chemischen oder biologischen Laborbetrieb. Hier besteht beispielsweise in Abzugsvorrichtungen oder Sterilbänken ein besonderer Bedarf an einer erfindungsgemäßen Vorrichtung, an der Laborgeräte oder klinische Geräte angebracht werden können, wobei die Vorrichtung idealerweise resistent gegen Chemikalien, Temperatur oder Strahlung (z.B. UV-Licht) ist. Beispielsweise kann ein Halterungselement so ausgestaltet sein, dass ein leerer oder zumindest teilweise gefüllter Glaskolben an dem Halterungssystem angeordnet werden kann und das Halterungssystem auf das Gewicht der Glaskolben so ausgelegt ist, dass diese unabhängig von ihrem Füllstand stabil gehalten werden können. Nach einer bevorzugten Ausgestaltung der vorliegenden Erfindung ist die Klemmschlittenschienenhalterungsvorrichtung, insbesondere der Halterungsschlitten (4.0) daher derart ausgestaltet, dass diese(r) zur Aufnahme eines Laborgerätes oder eines klinischen Gerätes, wie bspw. eines Reagenzglases, eines (Glas-)Kolbens, einer Kolone, einer Nutsche, eines (Scheide-)Trichters, einer Messpipette (wie Tropfer, "Eppendorf Pipette"), einer Spitzenbox, einer Spritzenbox, eines Perfusors, eines Abfallbehälters geeignet ist. Bevorzugt weist die erfindungsgemäße Klemmschlittenschienenhalterungsvorrichtung, insbesondere der Halterungsschlitten (4.0) hierzu eine Aufnahme, eine Aussparung, ein magnetisches Haltemittel, ein Klemmelement oder eine Kombination daraus auf, welche(s) derart ausgestaltet ist, ein entsprechendes Laborgerät oder ein klinisches Gerät (wie vorstehend beispielhaft aufgeführt) aufzunehmen oder damit gekoppelt zu werden.

Darüber hinaus kann die Vorrichtung zur Aufnahme und/oder Lagerung von anderen Gegenständen, wie bspw. Werkzeug, chirurgischen Materialien, Besteck oder Geschirr, ausgebildet sein. Dabei können die aufgenommenen und/oder gelagerten Gegenstände sehr einfach an einen anderen Einsatzort, bspw. innerhalb einer Werkstatt oder einem Labor, überführt werden. Beispielsweise kann hierbei eine Auflage- oder eine Einsteckeinheit vorgesehen sein, auf der der Gegenstand gelagert oder in die der Gegenstand eingeführt und/oder eingesteckt werden kann.

Weiterhin ist denkbar, dass die Vorrichtung dafür verwendet wird, um Möbelstücke in einem Raum zu positionieren. So könnte beispielsweise ein Sitz (9.0) so ausgestaltet sein, dass dieser zumindest einen erfindungsgemäßen Halterungsschlitten umfasst. Die Profilschiene könnte hierbei an einer Wand in einem Raum befestigt oder als Teil eines Halterungssystems, bspw. in einem Transportmittel angebracht sein. Vorteilhaft ergibt sich dadurch, dass der Sitz sehr einfach an der Profilschiene befestigt werden kann, aber gleichzeitig entlang der Länge der Nut verschiebbar ist. Gleichzeitig lässt sich hierdurch der Bestückungsgrad bzw. die Anzahl der Sitze und die Beabstandung der Sitze zueinander nach Bedarf einstellen.

Weiterhin kann die Vorrichtung auch für beispielsweise Tische, Schränke oder Regale verwendet werden. So könnten in einem Raum in unterschiedlicher Höhe Profilschienen angeordnet sein. Ein Regalboden oder ein Schrankelement kann zumindest einen erfindungsgemäßen Halterungsschlitten umfassen, wodurch der Regalboden oder das Schrankelement an der Profilschiene befestigt werden kann. Insbesondere, wenn ein reibungsverringerndes Mittel verwendet wird, können die Möbelstücke entlang der Profilschiene verschoben werden. Dies ermöglicht vorteilhaft eine individualisierte Gestaltung des Raumes, ohne dass weitere Löcher zur Befestigung der Möbelstücke in die Wände getrieben werden müssen. So lassen sich hierdurch der Bestückungsgrad bzw. die Anzahl an Möbelstücken bzw. Regalböden und die Beabstandung der Möbelstücke bzw. Regalböden zueinander nach Bedarf einstellen. Es ist vorstellbar, dass die Abstände der Profilschienen zueinander genormt sind, so dass Möbelhersteller die Gestaltung der Möbel hieran anpassen können. Dadurch ergibt sich vorteilhaft, dass man bspw. für einen Umzug in eine neue Wohnung die Möbelstücke einfach an die Profilschienen der neuen Wohnung anordnen kann. Die Profilschienen können waagerecht, senkrecht oder in beliebigen Winkeln im Raum angeordnet sein.

Zudem ist denkbar, dass die erfindungsgemäße Vorrichtung Anwendung im Nass- und/oder Trockenbau findet. So können beispielsweise flächige Elemente (z.B. Gipsplatten) erfindungsgemäße Halterungselemente umfassen, mit welchen sie an im Raum positionierte erfindungsgemäße Profilschienen befestigt werden.

Die Verwendung der erfindungsgemäßen Vorrichtung ist hierbei nicht auf die beschriebenen Verwendungsmöglichkeiten beschränkt. Weiterhin kann die Vorrichtung auch kinematisch umgekehrt ausgestaltet sein. Dies ist z.B. dann der Fall, wenn eine Profilschiene oder ein flächiges Element (z.B. eine Wand) statt einer Nut ein Federeinrastelement umfasst, wobei der Halterungsschlitten eine Nut mit zumindest einer Nuteinrasterhebung umfasst. Insbesondere in Bereichen, in denen bspw. hohe Ansprüche an Reinheit gefordert sind, kann dies gewünscht sein, da ein sich in den umgebenden Raum erhebendes Federeinrastelement vorteilhaft einfacher (z.B. mit Wasser) zu reinigen ist als eine Nut mit einer Nutentiefe. So kann beispielsweise im gastronomischen Bereich oder in Schlachtbetrieben eine solche Anordnung gewünscht sein. Zudem kann weiterhin vorteilhaft verhindert werden, dass Gegenstände in eine Nut fallen. Beispielsweise kann es beim Hantieren mit Pipetten dazu kommen, dass sich abgeworfene Pipettenspitzen in eine unvorhergesehene Richtung bewegen und evtl. in einer Nut einer, den Halterungsschlitten tragenden, Profilschiene fallen. Dies wird durch eine kinematische Umkehr vorteilhaft verhindert.

Es kann darüber hinaus auch vorgehen sein, dass, wo anders beschrieben, der Nutengrund konvexe Wölbungen (bspw. Nuteinrasterhebungen) aufweisen kann, welche vorzugsweise komplementär zu einer Wölbung, insbesondere einer konkaven Wölbung, auf dem Federeinrastelement des Halterungsschlittens ausgebildet ist. Umgedreht davon kann ebenfalls vorgesehen sein, wo anders beschrieben, dass das Federeinrastelement des Halterungsschlittens konvexe Wölbungen (bspw. Federeinrastelementerhebung) auf, welche vorzugsweise komplementär zu einer Wölbung, insbesondere einer konkaven Wölbung, auf dem Nutengrund der Profilschiene ausgebildet ist.

Ein Objekt, das die Befestigung von Gegenständen über eine erfindungsgemäße Klemmschlittenschienenhalterungsvorrichtung vorsieht, kann bspw. mit einem oder mehreren Profilschienen ausgestattet sein, um ein oder mehrere Halterungsschlitten gleichzeitig oder an unterschiedlichen Positionen des Objekts einsetzen zu können.

Die Erfindung betrifft zudem ein Kombinationserzeugnis zum reversiblen Befestigen eines Halterungsschlittens an einer Profilschiene, wobei dieses eine Profilschiene, die zumindest eine Nut umfasst und einen Halterungsschlitten umfasst, wobei der Halterungsschlitten über das Federeinrastelement mit der Nut formschlüssig verbindbar ist, wobei das Federeinrastelement vor Etablierung der formschlüssigen Verbindung widerstandsfrei in die Nut einführbar ist und um die Federeinrastelementlängsachse partiell rotierbar ist, bis eine Feststellposition erreicht ist. Diese ist weiter oben beschrieben.

Die Erfindung betrifft zudem ein Verfahren zum reversiblen Befestigen eines Halterungsschlittens an einer Profilschiene wobei im ersten Schritt eine Klemmschlittenschienenhalterungsvorrichtung, umfassend eine Profilschiene mit zumindest einer Nut sowie ein Halterungsschlitten mit zumindest einem Federeinrastelement und zumindest einem Halterungselement bereitgestellt wird, wobei im zweiten Schritt das Federeinrastelements innerhalb der Nut positioniert wird, wobei das Federeinrastelement vor Etablierung einer formschlüssigen Verbindung widerstandsfrei in die Nut einführbar ist und um die Federeinrastelementlängsachse partiell rotierbar ist, wobei im dritten Schritt eine formschlüssige Verbindung etabliert wird, indem das Federeinrastelement so weit rotiert wird, bis zumindest eine Nuteinrasterhebung, bevorzugt die erste Nuteinrasterhebung in eine Federeinrastelementvertiefung, bevorzugt die erste Federeinrastelementvertiefung formschlüssig eingreift und das Halterungselement eine Nutöffnungskante kontaktiert, wobei im vierten Schritt die formschlüssige Verbindung beendet wird, indem die vorgenannten Schritte in umgekehrter Reihenfolge durchgeführt werden.

Die Erfindung betrifft zudem die Verwendung der hierin beschriebenen Vorrichtung oder des Kombinationserzeugnisses zum reversiblen Befestigen eines Halterungsschlittens an einer Profilschiene und/oder zum Befestigen von Gegenständen in einer Höhe im Raum.

Zudem betrifft die Erfindung einen oben beschriebenen Halterungsschlitten zum reversiblen Befestigen des Halterungsschlittens in einer Nut einer Profilschiene, insbesondere in einer oben beschriebenen Nut einer oben beschriebenen Profilschiene, wobei der Halterungsschlitten zumindest ein oben beschriebenes Federeinrastelement aufweist, welches zumindest eine oben beschriebene Federeinrastelementvertiefung und/oder zumindest eine oben beschriebene Federeinrastelementerhebung aufweist, wobei über die Federeinrastelementvertiefung und/oder die Federeinrastelementerhebung in einer oben beschriebenen Wirkverbundenheit mit zumindest einer oben beschriebenen Nuteinrasterhebung und/oder mit einer oben beschriebenen Nutöffnungskante gebracht werden kann, wobei die Wirkverbundenheit dazu eingerichtet ist, eine wie oben beschriebene reversible Befestigung der Halterungsschlittenvorrichtung innerhalb der Nut zu ermöglichen. Insbesondere weist der Halterungsschlitten zumindest ein Halterungselement und zumindest ein dem Halterungselement gegenüber angeordnetes Federeinrastelement auf, wobei der Halterungsschlitten einen Nutöffnungskantenauflagesteg aufweist, wobei das Federeinrastelement derart ausgebildet ist, dass es innerhalb der Nut der Profilschiene um eine Federeinrastelementlängsachse partiell rotierbar ist, wobei das Federeinrastelement zumindest eine Federeinrastelementvertiefung und/oder zumindest eine Federeinrastelementerhebung aufweist, wobei die Federeinrastelementvertiefung und/oder die Federeinrastelementerhebung derart ausgebildet sind, dass sie in Wirkverbundenheit mit zumindest einer Nuteinrasterhebung und/oder mit einer Nutöffnungskante der Profilschiene gebracht werden kann, wobei die Wirkverbundenheit dazu eingerichtet ist, eine reversible Befestigung der Halterungsschlitten innerhalb der Nut der Profilschiene zu ermöglichen. Weitere vorteilhafte Ausgestaltungen des Halterungsschlitten sind hierin in der Beschreibung und in den Ansprüchen definiert.

Insbesondere ist unter der Wirkverbundenheit zu verstehen, dass das Federeinrastelement des Halterungsschlittens so in die Nut eingeführt wird, dass eine reversible Befestigung des Halterungsschlittens innerhalb der Nut, insbesondere wie oben beschrieben, ermöglicht ist.

Weiterhin betrifft die Erfindung die Verwendung des oben beschriebenen Halterungsschlittens zum reversiblen Befestigen des Halterungsschlittens innerhalb einer Nut einer Profilschiene, vorzugsweise einer oben beschriebenen Nut.

Abschließend sei angemerkt, dass der Fachmann erkennt, dass er die einzelnen Merkmale und Ausgestaltungen der Erfindung je nach Anwendungsgebiet oder Bedarf wählen oder in ihrer spezifischen Ausgestaltung wählen oder zueinander anpassen kann, so dass sämtlichen Merkmalen, die in den Anmeldungsunterlagen und insbesondere in den abhängigen Ansprüchen genannt sind, trotz des vorgenommenen formalen Rückbezugs auf einen oder mehrere bestimmte Ansprüche, auch einzeln oder in beliebiger Kombination eigenständiger Schutz zukommen soll.

Weitere Vorteile, Merkmale und Anwendungsmöglichkeiten der vorliegenden Erfindung ergeben sich auch aus der nachfolgenden Beschreibung von Ausführungsbeispielen und den Zeichnungen. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

### Ausführungsbeispiele

Zur Erläuterung des Grundprinzips der erfindungsgemäßen Vorrichtung wird die vorliegende Erfindung nachfolgend anhand von Ausführungsbeispielen unter Bezugnahme auf die beiliegenden Zeichnungen näher beschrieben. Anzumerken ist, dass das Verhältnis und die Abmessungen der erfindungsgemäßen Bauteile zu Gunsten der Darstellung nicht der Realität entsprechen müssen.

Dabei zeigt
- **Fig. 1A:**: eine Ausführungsform einer Profilschiene mit nicht eingeführten Halterungsschlitten in Querschnittsdarstellung
- **Fig. 1B:**: eine Ausführungsform einer Profilschiene mit darin eingeführten und befestigten Halterungsschlitten im Querschnittsdarstellung
- **Fig. 2:**: eine Ausführungsform einer Profilschiene mit darin eingeführten und befestigten Halterungsschlitten in Querschnittsdarstellung
- **Fig. 3:**: eine Ausführungsform einer Profilschiene mit darin eingeführten und befestigten Halterungsschlitten in Querschnittsdarstellung
- **Fig. 4A:**: eine Ausführungsform einer Profilschiene mit darin eingeführten und befestigten Halterungsschlitten in perspektivischer Ansicht
- **Fig. 4B:**: eine Ausführungsform einer Profilschiene mit darin eingeführten und befestigten Halterungsschlitten in Querschnittsdarstellung
- **Fig. 5:**: eine Ausführungsform einer Profilschiene mit eingezeichneten Winkelpositionen in Querschnittdarstellung
- **Fig. 6A-D:**: verschiedene Ausführungsformen einer Profilschiene und Halterungsschlitten in Querschnittsdarstellung
- **Fig. 7:**: eine Ausführungsform einer Profilschiene mit darin eingeführten und befestigten Halterungsschlitten in Querschnittsdarstellung
- **Fig. 8:**: eine Ausführungsform einer Profilschiene mit darin eingeführten und befestigten Halterungsschlitten in Querschnittsdarstellung
- **Fig. 9A:**: eine Ausführungsform einer Profilschiene mit darin eingeführten und befestigten Halterungsschlitten in Querschnittsdarstellung
- **Fig. 9B:**: eine Ausführungsform einer Profilschiene mit Schlittenarretierungsaussparungen in perspektivischer Ansicht
- **Fig. 10:**: eine Ausführungsform einer Profilschiene mit darin eingeführten und befestigten flexiblen Halterungsschlitten in Querschnittsdarstellung
- **Fig. 11:**: eine Ausführungsform der Profilschiene mit Halterungsschlitten als Laborgeräte- / Glaskolbenhalterung in perspektivischer Ansicht
- **Fig. 12:**: eine Ausführungsform der Profilschiene mit darin befestigten flexiblen Halterungsschlitten in Querschnittsdarstellung, wobei der Halterungsschlitten einen Sitz umfasst.
- **Fig. 13 A bis E:**: ein Referenzbeispiel eines Halterungselements (4.0) mit einem/r als Druckkontakt (14.0) wirkenden Nutöffnungskantenauflagesteg (4.5) / Federeinrastelementerhöhung (5.1), wobei die reversible Befestigung an der Profilschiene (2.0) in den Schritten A bis E gezeigt ist.
- **Fig. 14:**: ein Referenzbeispiel eines Halterungselements (4.0) mit einer als Druckkontakt (14.0) wirkenden Federeinrastelementerhebung (5.1), wobei die reversible Befestigung an der Profilschiene (2.0) in den Schritten A bis E gezeigt ist.

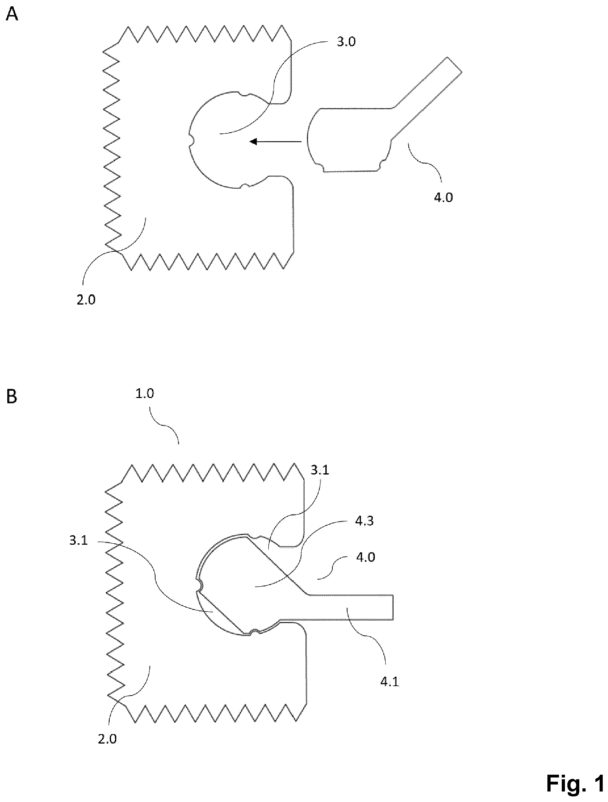

Die **Fig. 1A** zeigt eine Ausführungsform der Erfindung umfassend eine Profilschiene (2.0) mit einer Nut (3.0) und einen in diese einführbaren Halterungsschlitten (4.0). Der Pfeil deutet die Einfuhrrichtung an. Die **Fig. 1B** zeigt einen innerhalb der Nut (3.0) befestigten Halterungsschlitten (4.0) in Feststellposition, der ein Halterungselement (4.1) und ein Federeinrastelement (4.3) umfasst.

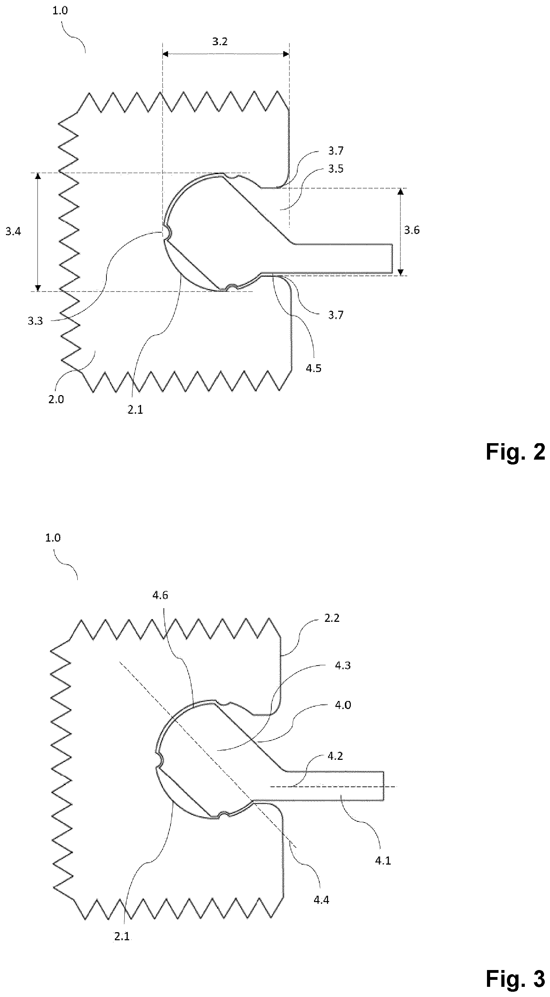

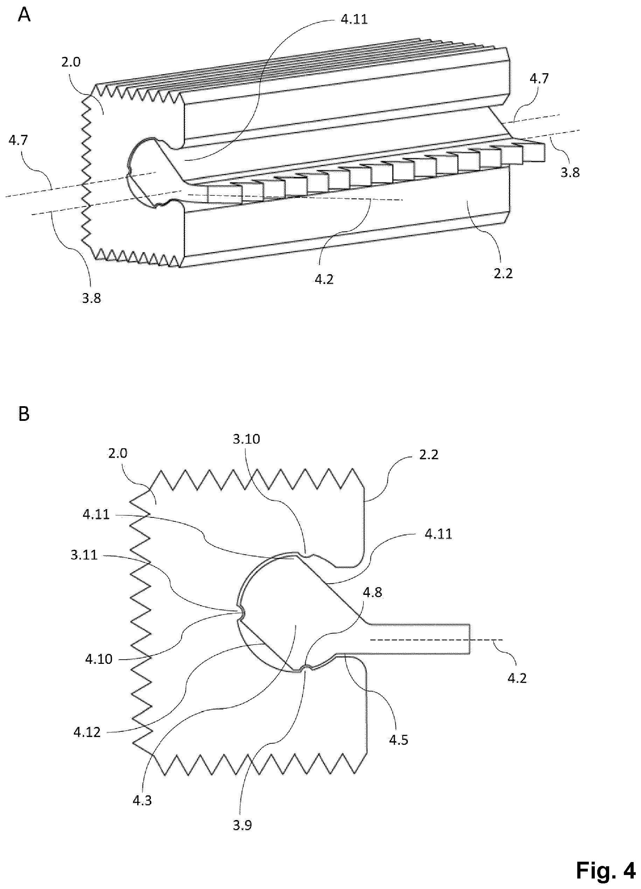

Die **Fig. 2, Fig. 3****,** **Fig. 4A** und **Fig. 4B** zeigen die gleiche Ausführungsform wie die Fig. 1A und Fig. 1B und unterscheiden sich aus Gründen der Übersichtlichkeit in der Anzahl der gezeigten Bezugszeichen. Das Eingreifen der Nuteinrasterhebungen bewirkt einerseits eine mechanische Kopplung / formschlüssige Verbindung des Federeinrastelements (4.3) mit der Nut (3.0) sowie auch eine haptische Rückmeldung, so dass der Nutzer über die erfolgte Befestigung informiert ist.

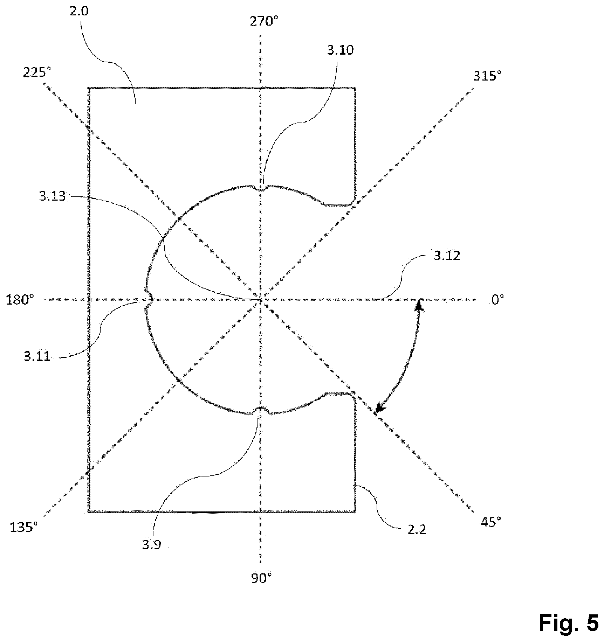

Die **Fig. 5** zeigt eine Ausführungsform einer Profilschiene (2.0) mit dargestellten Winkelpositionen, wobei eine 0°-Achse ausgehend vom 0° Winkel als rechtwinklig zur Profilschienenoberfläche (2.2) definiert ist. Der hier nicht, aber in den vorherigen Figuren, dargestellte Halterungsschlitten (4.0) wird dabei so eingeführt, dass die Federeinrastelementmittelachse (4.4) im Wesentlichen parallel zur 0°-Achse orientiert ist. Eine Drehung des Halterungsschlittens (4.0) um die Federeinrastelementlängsachse (4.7) bewirkt ein Eingreifen der Nuteinrasterhebungen (3.9, 3.11) in die Federeinrastelementvertiefungen (4.8, 4.10) und ein Kontaktieren der Federeinrastelementoberkante (4.13) und der zweiten Nuteinrasterhebung (3.10) sowie ein Kontaktieren des Nutöffnungskantenauflagestegs (4.5) und der Nutöffnungskante (3.7).

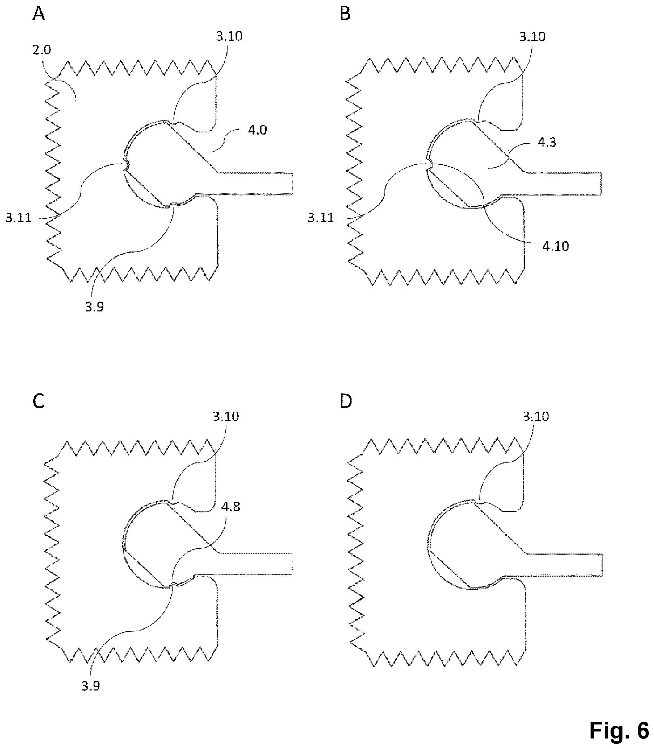

Die **Fig. 6** zeigt verschiedene Ausführungsformen der erfindungsgemäßen Vorrichtung bestehend aus Profilschiene (2.0) und Halterungsschlitten (4.0), wobei sich die Nuten der Profilschienen (2.0) in der Anzahl der Nuteinrasterhebungen (3.9, 3.10, 3.11) und die Federeinrastelemente (4.3) in der Anzahl der Federeinrastelementvertiefungen (4.8, 4.10) unterscheiden.

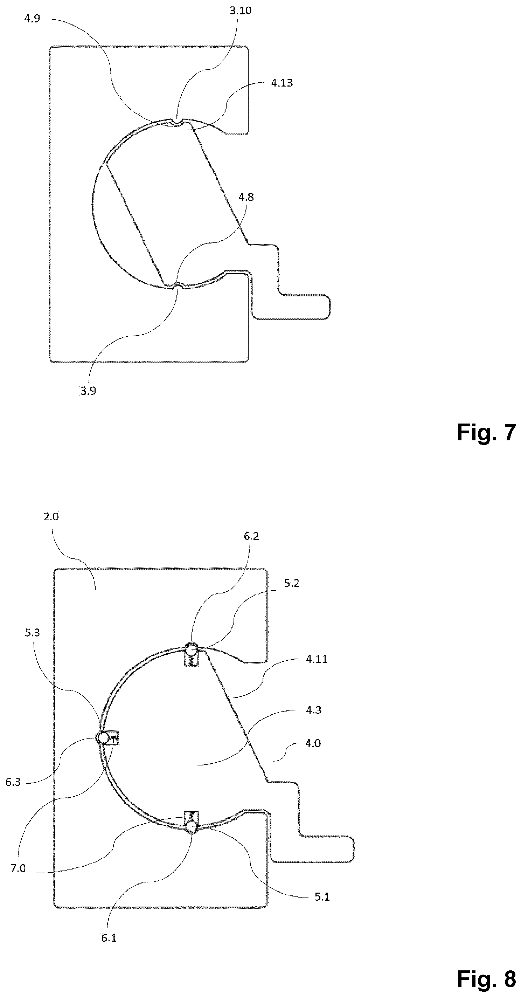

Die **Fig. 7** zeigt eine weitere Ausführungsform, wobei hier die Federeinrastelementoberkante (4.13) als eine zweite Federeinrastelementvertiefung (4.9) ausgestaltet ist, in welche die zweite Nuteinrasterhebung (3.10) formschlüssig eingreift.

Die **Fig. 8** zeigt eine Ausführungsform, wobei die Federelementeinrastelementvertiefungen als Federelementeinrasterhebungen (5.1, 5.2, 5.3) ausgestaltet sind und in Nuteinrastvertiefungen (6.1, 6.2, 6.3) eingreifen. Um ein Eingreifen einer Federelementeinrasterhebung (5.1, 5.2, 5.3) in eine Nuteinrastvertiefung (6.1, 6.2, 6.3) zu ermöglichen, kann die Federeinrastelementerhebung (5.1, 5.2, 5.3) bspw. über eine Spannfeder (7.0) in dem Federeinrastelement (4.3) gelagert sein, so dass die Spannfeder (7.0) der Federelementeinrasterhebung beim Einführen in die Nut gespannt wird und sich beim Erreichen der Nuteinrastvertiefung (6.1, 6.2, 6.3) entspannt, wodurch die Federelementeinrasterhebung (5.1, 5.2, 5.3) in die Nuteinrastvertiefung (6.1, 6.2, 6.3) gedrückt wird und so eine formschlüssige Verbindung des Halterungsschlittens (4.0) mit der Profilschiene (2.0) ermöglicht wird.

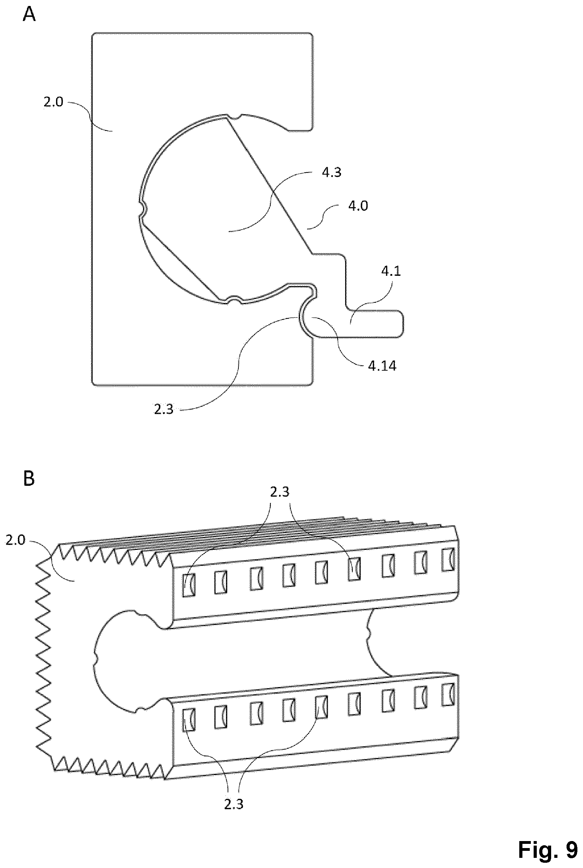

Die in **Fig. 9** dargestellte Ausführungsform der erfindungsgemäßen Vorrichtung zeigt einen in einer Profilschiene (2.0) befestigten Halterungsschlitten (4.0), wobei das Halterungselement (4.1) einen Schlittenarretierungsvorsatz (4.14) umfasst, der innerhalb der Schlittenarretierungsaussparung (2.3) formschlüssig eingreifen kann, so dass der Halterungsschlitten (4.0) entlang der Längsachse der Profilschiene (2.0) nicht verrutschen kann. Der Schlittenarretierungsvorsatz (4.14) und/oder die Schlittenarretierungsaussparung (2.3) können ein magnetisches Element umfassen, so dass ein selbstständiges Lösen der formschlüssigen Verbindung vorteilhaft verhindert werden kann.

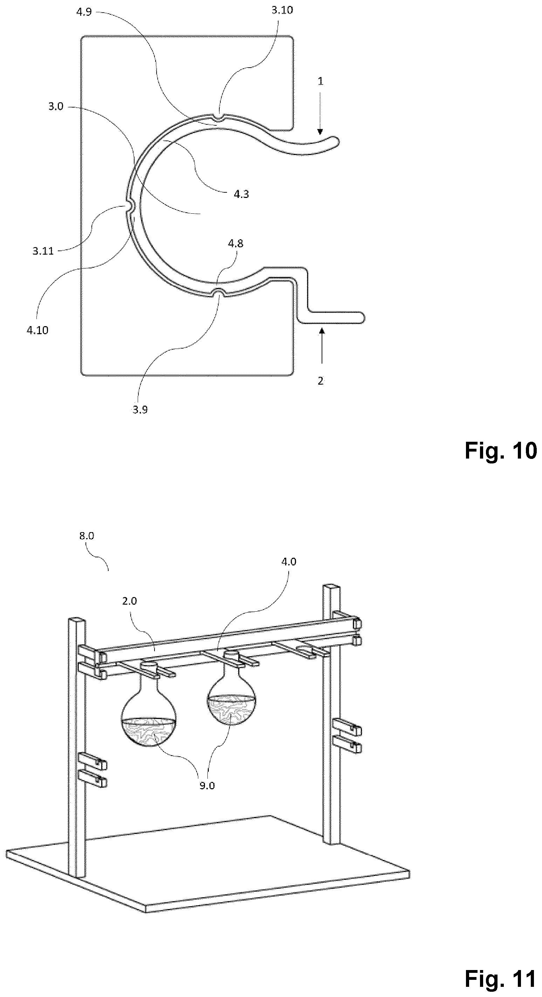

Die **Fig. 10** zeigt eine alternative Ausführungsform eines Federeinrastelements (4.3), wobei dieses aus einem flexiblen Material (hier: ein Metall) gefertigt ist. Um das Federeinrastelement (4.3) innerhalb der Nut (3.0) zu befestigen, wird das Federeinrastelement (4.3) an den Stellen 1 und/oder 2 zusammengedrückt um dieses in die Nut (3.0) ein- oder auszuführen und ein Eingreifen der Nuteinrasterhebungen (3.9, 3.10, 3.11) in die Federelementeinrastvertiefungen (4.8, 4.9, 4.10) zu ermöglichen. Vorteilhaft geht mit dieser Ausführungsform eine Gewichts- / Materialersparnis des Federeinrastelements (4.3) einher. Um die Dicke des Federeinrastelements weiter zu reduzieren, können die Federeinrastelementvertiefungen (4.8, 4.9, 4.10) auch, wie oben beschrieben, als Federeinrastelementerhebungen ausgestaltet sein, welche in Nuteinrastvertiefungen eingreifen.

Die **Fig. 11** zeigt eine beispielhafte Anwendungsmöglichkeit der erfindungsgemäßen Vorrichtung als Halterungssystem für den Laborbetrieb (8.0). Hier sind innerhalb der Profilschiene (2.0) Halterungsschlitten (4.0) befestigt, wobei in letzteren Glaskolben (9.0) eingehängt sind. Die Profilschiene (2.0) kann in unterschiedlichen Höhen positioniert werden.

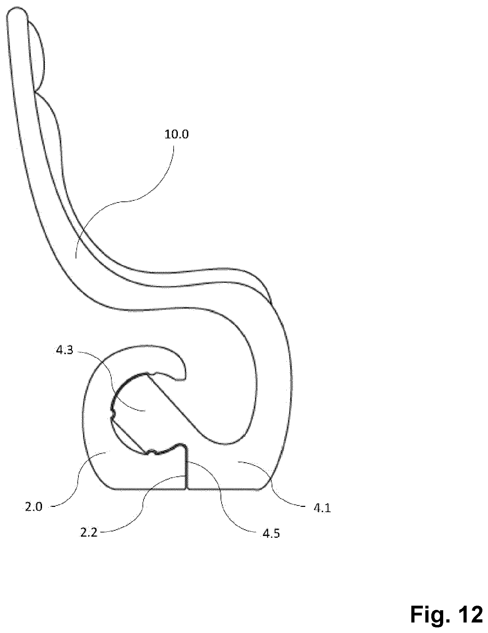

Die **Fig. 12** zeigt eine Ausführungsform der Erfindung, wobei ein Sitz (10.0) innerhalb der Profilschiene (2.0) befestigt werden kann. Zwischen der Profilschienenoberfläche (2.2) und dem Nutöffnungskantenauflagesteg (4.5) kann ein reibungserhöhendes Mittel (z.B. eine Gummierung) angebracht sein, um ein ungewolltes Rutschen des Sitzes (10.0) bei dessen Belastung zu verhindern. Alternativ kann das Halterungselement (4.1), wie in Fig. 9 dargestellt, einen in eine Schlittenarretierungsaussparung (2.3) eingreifenden Schlittenarretierungsvorsatz (4.14) umfassen.

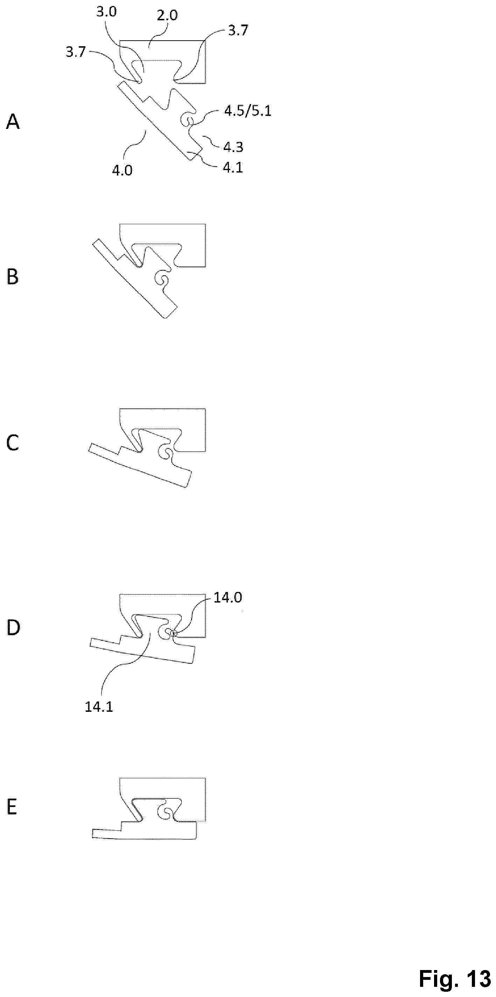

Die Fig. 13 A bis E zeigt ein Referenzbeispiel eines Halterungselements (4.0) mit einem/r als Druckkontakt (14.0) wirkenden Nutöffnungskantenauflagesteg (4.5) / Federeinrastelementerhöhung (5.1), wobei die reversible Befestigung an der Profilschiene (2.0) in den Schritten A bis E gezeigt ist. Das Federeinrastelement (4.3) des Halterungselements (4.0) wird in die Nut (3.0) der Profilschiene (2.0) eingesetzt, bis der Druckkontakt (14.0) erreicht ist. Dieser wird durch ein weiteres Einführen und partielles Drehen des Federeinrastelements (4.3) um die nicht dargestellte Federeinrastelementmittelachse (4.4) des Federeinrastelements (4.3) überwunden, wodurch eine haptische Rückmeldung erzeugt wird, während der Nutöffnungskantenauflagesteg (4.5) / die Federeinrastelementerhöhung (5.1) in Richtung des Federeinrastelementzentrum (14.1) gedrückt wird, oder sich wieder von diesem weg biegt. Diese ist abhängig von der Form und der Toleranzen der Nutöffnungskante (3.7) sowie der Ausgestaltung des Nutöffnungskantenauflagestegs (4.5) / der Federeinrastelementerhebung (5.1). In Schritt E ist das Halterungselement (4.0) mit der Profilschiene (2.0) verbunden.

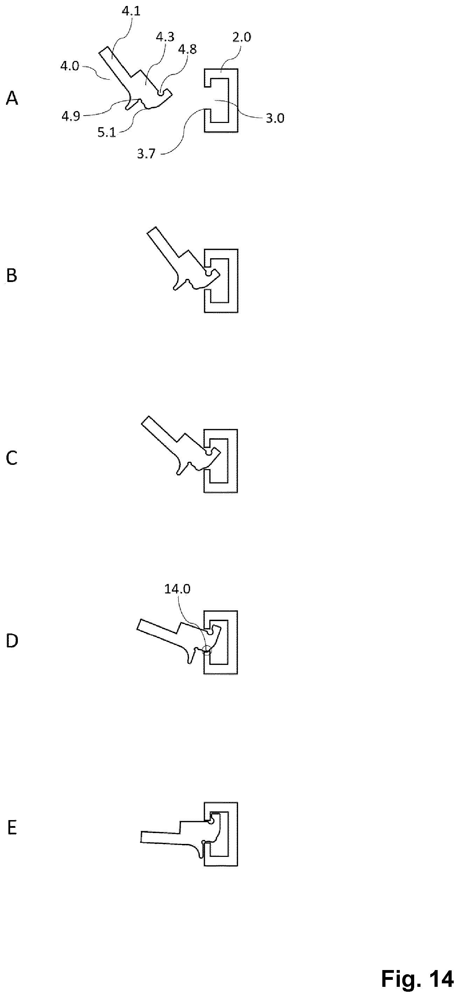

Die **Fig. 14** A bis E zeigt ebenfalls ein Referenzbeispiel eines Halterungselements (4.0) mit einer als Druckkontakt (14.0) (innerhalb des Kreises dargestellt) wirkenden Federeinrastelementerhebung (5.1), wobei die reversible Befestigung an der Profilschiene (2.0) in den Schritten A bis E gezeigt ist. Das Federeinrastelement (4.3) des Halterungselements (4.0) wird in die Nut (3.0) der Profilschiene (2.0) eingesetzt, bis der Druckkontakt (14.0) erreicht ist. Dieser wird durch ein weiteres Einführen und partielles Drehen des Federeinrastelements (4.3) um die nicht dargestellte Federeinrastelementmittelachse (4.4) überwunden, wodurch eine haptische Rückmeldung erzeugt wird. Diese ist abhängig von der Form und der Toleranzen der Nutöffnungskante (3.7) sowie der Ausgestaltung der Federeinrastelementerhebung (5.1). In Schritt E ist das Halterungselement (4.0) mit der Profilschiene (2.0) verbunden. Anzumerken ist hier, dass die erste Federeinrastelementvertiefung (4.8) und die zweite Federeinrastelementvertiefung (4.9) selbst keinen Beitrag zur haptischen Rückmeldung leisten. In diesem Fall bieten beide einen Raum, in welchem die Nutöffnungskante Platz findet.

### Bezugszeichenliste

| | | | |
|---|---|---|---|
| 1.0 | Klemmschlittenschienenhalterungsvorrichtung | 4.6 | konvexe Wölbung |
| 2.0 | Profilschiene | 4.7 | Federeinrastelementlängsachse |
| 2.1 | konkave Wölbung | 4.8 | erste Federeinrastelementvertiefung |
| 2.2 | Profilschienenoberfläche | 4.9 | zweite Federeinrastelementvertiefung |
| 2.3 | Schlittenarretierungsaussparung | 4.10 | dritte Federeinrastelementvertiefung |
| 3.0 | Nut | 4.11 | Federeinrastelementoberseite |
| 3.1 | Nutenhohlraum | 4.12 | Federeinrastelementunterseite |
| 3.2 | Nutentiefe | 4.13 | Federeinrastelementoberkante |
| 3.3 | Nutengrund | 4.14 | Schlittenarretierungsvorsatz |
| 3.4 | Nutenbreite | 5.1 | erste Federeinrastelementerhebung |
| 3.5 | Nutöffnung | 5.2 | zweite Federeinrastelementerhebung |
| 3.6 | Nutöffnungsbreite | 5.3 | dritte Federeinrastelementerhebung |
| 3.7 | Nutöffnungskante | 6.1 | erste Nuteinrastvertiefung |
| 3.8 | Nutöffnungskantenauflagesteglängsachse | 6.2 | zweite Nuteinrastvertiefung |
| 3.9 | erste Nuteinrasterhebung | 6.3 | dritte Nuteinrastvertiefung |
| 3.10 | zweite Nuteinrasterhebung | 7.0 | Spannfeder |
| 3.11 | dritte Nuteinrasterhebung | 8.0 | Halterungssystem für den Laborbetrieb |
| 3.12 | Nutöffnungszentrum | 9.0 | Glaskolben |
| 3.13 | Nutzentrum | 10.0 | Sitz |
| 4.0 | Halterungsschlitten | 14.0 | Druckkontakt |
| 4.1 | Halterungselement | 14.1 | Federeinrastelementzentrum |
| 4.2 | Halterungselementmittelachse | | |
| 4.3 | Federeinrastelement | | |
| 4.4 | Federeinrastelementmittelachse | | |
| 4.5 | Nutöffnungskantenauflagesteg | | |

## Patentansprüche

1. **Klemmschlittenschienenhalterungsvorrichtung** (1.0) zum reversiblen Befestigen eines Halterungsschlittens (4.0) an einer Profilschiene (2.0),
wobei die Vorrichtung (1.0) zumindest einen Halterungsschlitten (4.0) und zumindest eine Profilschiene (2.0) aufweist,
wobei die Profilschiene (2.0) zumindest eine Nut (3.0) aufweist,
wobei die Nut (3.0) einen Nutenhohlraum (3.1), eine Nutentiefe (3.2), einen Nutengrund (3.3), eine Nutenbreite (3.4), eine Nutöffnung (3.5) und zumindest eine Nutöffnungskante (3.7) aufweist,
wobei der Halterungsschlitten (4.0) innerhalb der Nut (3.0) anordenbar ist,
wobei der Halterungsschlitten (4.0) zumindest ein Halterungselement (4.1) und zumindest ein dem Halterungselement gegenüber angeordnetes Federeinrastelement (4.3) aufweist,
wobei der Halterungsschlitten (4.0) einen Nutöffnungskantenauflagesteg (4.5) aufweist, wobei das Federeinrastelement (4.3) innerhalb der Nut (3.0) um eine Federeinrastelementlängsachse (4.7) bis zu einer Feststellposition des Federeinrastelements (4.3) partiell rotierbar ist,
wobei das Federeinrastelement (4.3) mit der Nut (3.0) reversibel verbindbar ist,
**dadurch gekennzeichnet, dass**
zumindest eine Federeinrastelementvertiefung (4.8, 4.9, 4.10) in Wirkverbundenheit mit zumindest einer Nuteinrasterhebung (3.9, 3.10, 3.11) steht, wobei die zumindest eine Nuteinrasterhebung (3,9,3.10,3.11) im Wesentlichen entlang des Umfangs der Kreisfläche der Nut (3.0) angeordnet ist,
oder wobei zumindest eine Federeinrastelementerhebung (5.1, 5.2, 5.3) in eine Nuteinrastvertiefung (6.1, 6.2, 6.3) eingreift, wobei die Nut (3.0) zumindest die Nuteinrastvertiefung (6.1, 6.2, 6.3) umfasst.

2. Vorrichtung gemäß Anspruch 1, wobei der Nutöffnungskantenauflagesteg (4.5) Federeinrastelements (4.3) als ein Druckkontakt ausgestaltet.

3. Vorrichtung gemäß Anspruch 1 oder 2, wobei die Form des Federeinrastelements (4.3) und/oder die Form des Nutöffnungskantenauflagestegs (4.5) dazu eingerichtet ist während der reversiblen Verbindung oder während des Entfernens des Halterungsschlittens (4.0) in oder aus der Nut (3.0) eine haptische Rückmeldung zu erlauben.

4. Vorrichtung gemäß einem der Ansprüche 1 bis 3, wobei das Federeinrastelement (4.3) zumindest eine erste Federeinrastelementvertiefung (4.8) umfasst, die proximal zum Nutöffnungskantenauflagesteg (4.5) angeordnet ist.

5. Vorrichtung gemäß einem der Ansprüche 1 bis 4, wobei die Nut (3.0) zumindest eine erste Nuteinrasterhebung (3.9) und/oder zumindest eine zweite Nuteinrasterhebung (3.10) aufweist, wobei diese sich gegenüber angeordnet und durch den Nutenhohlraum (3.1) voneinander abgegrenzt sind.

6. Vorrichtung gemäß einem der Ansprüche 1 bis 5, wobei die erste Nuteinrasterhebung (3.9), welche proximal zum Nutöffnungskantenauflagesteg (4.5) orientiert ist, in die erste Federeinrastelementvertiefung (4.8) formschlüssig eingreifbar ist.

7. Vorrichtung gemäß einem der Ansprüche 1 bis 6, wobei die Nut (3.0) eine dritte Nuteinrasterhebung (3.11) aufweist, die zu der ersten Nuteinrasterhebung (3.9) und der zweiten Nuteinrasterhebung (3.10) beabstandet ist und am Nutengrund (3.3) angeordnet ist.

8. Vorrichtung gemäß einem der Ansprüche 1 bis 7, wobei das Federeinrastelement (4.3) eine dritte Federeinrastelementvertiefung (4.10) aufweist, die distal zum Nutöffnungskantenauflagesteg (4.5) angeordnet ist und die konvexe Wölbung (4.6) von einer Federeinrastelementunterseite (4.12) abgrenzt.

9. Vorrichtung gemäß Anspruch 7 oder 8, wobei die dritte Nuteinrasterhebung (3.11) in die dritte Federeinrastelementvertiefung (4.10) formschlüssig eingreifbar ist.

10. Vorrichtung gemäß einem der Ansprüche 1 bis 9, wobei das Federeinrastelement (4.3) eine zweite Federeinrastelementvertiefung (4.9) aufweist, oder wobei die Federeinrastelementoberkante (4.13) als eine zweite Federeinrastelementvertiefung (4.9) ausgestaltet ist.

11. Vorrichtung gemäß einem der Ansprüche 1 bis 10, wobei das Material der Profilschiene (2.0) und/oder des Halterungsschlittens (4.0) ein Metall, oder einen Kunststoff, oder ein Glas, oder eine Keramik, oder einen Verbundwerkstoff, oder ein Holz oder eine Kombination aus zumindest einem der genannten umfasst.

12. Vorrichtung gemäß einem der Ansprüche 1 bis 11, wobei die Profilschiene (2.0) und/oder der Halterungsschlitten (4.0) zumindest ein magnetisches Element aufweist.

13. Vorrichtung gemäß einem der Ansprüche 1 bis 12, wobei die Profilschiene (2.0) zumindest eine Schlittenarretierungsaussparung (2.3) aufweist.

14. Vorrichtung gemäß Anspruch 13, wobei der Halterungsschlitten (4.0) zumindest einen Schlittenarretierungsvorsatz (4.14) aufweist.

15. **Verfahren** zum reversiblen Befestigen eines Halterungsschlittens (4.0) an einer Profilschiene (2.0) umfassend die folgenden Schritte:
a) **Bereitstellen** einer Klemmschlittenschienenhalterungsvorrichtung (1.0) gemäß einem der Ansprüche 1 bis 14, aufweisend eine Profilschiene (2.0) mit zumindest einer Nut (3.0), sowie einen Halterungsschlitten (4.0) mit zumindest einem Federeinrastelement (4.3) und zumindest einem Halterungselement (4.1),
b) **Positionieren** des Federeinrastelements (4.3) innerhalb der Nut (3.0), wobei das Federeinrastelement (4.3) vor Etablierung einer formschlüssigen Verbindung widerstandsfrei in die Nut (3.0) einführbar ist und um die Federeinrastelementlängsachse (4.7) partiell rotierbar ist,
c) **Etablieren der formschlüssigen Verbindung,** indem das Federeinrastelement (4.3) so weit rotiert wird, bis zumindest eine Nuteinrasterhebung, bevorzugt die erste Nuteinrasterhebung (3.9) in eine Federeinrastelementvertiefung, bevorzugt die erste Federeinrastelementvertiefung (4.8) formschlüssig eingreift und das Halterungselement (4.1) eine Nutöffnungskante (3.7) kontaktiert, wobei die zumindest eine Nuteinrasterhebung (3,9) im Wesentlichen entlang des Umfangs der Kreisfläche der Nut (3.0) angeordnet ist,
d) Beenden der formschlüssigen Verbindung, indem die Schritte b) und c) in umgekehrter Reihenfolge durchgeführt werden.

## Claims

1. **Clamp slide rail mounting device** (1.0) for reversibly fastening a mounting slide (4.0) to a profile rail (2.0),
wherein the device (1.0) comprises at least one mounting slide (4.0) and at least one profile rail (2.0),
wherein the profile rail (2.0) comprises at least one groove (3.0),
wherein the groove (3.0) comprises a groove cavity (3.1), a groove depth (3.2), a groove base (3.3), a groove width (3.4), a groove opening (3.5), and at least one groove opening edge (3.7),
wherein the mounting slide (4.0) is arrangeable within the groove (3.0),
wherein the mounting slide (4.0) comprises at least one mounting element (4.1) and at least one spring latching element (4.3) arranged opposite the mounting element,
wherein the mounting slide (4.0) comprises a groove opening edge support rail (4.5),
wherein the spring latching element (4.3) is partially rotatable within the groove (3.0) about a spring latching element longitudinal axis (4.7) as far as a locking position of the spring latching element (4.3),
wherein the spring latching element (4.3) is reversibly connectable with the groove (3.0),
**characterized in that**
at least one spring latching element depression (4.8, 4.9, 4.10) is in operative connection with at least one groove latch projection (3.9, 3.10, 3.11), wherein the at least one groove latch projection (3.9, 3.10, 3.11) is arranged substantially along the circumference of the circular area of the groove (3.0),
or wherein at least one spring latching element projection (5.1, 5.2, 5.3) engages in a groove latch recess (6.1, 6.2, 6.3), wherein the groove (3.0) comprises at least the groove latch recess (6.1, 6.2, 6.3).

2. Device according to claim 1, wherein the groove opening edge support rail (4.5) of the spring latching element (4.3) is configured as a pressure contact.

3. Device according to claim 1 or 2, wherein the shape of the spring latching element (4.3) and/or the shape of the groove opening edge support rail (4.5) is configured to permit tactile feedback during the reversible connection or during insertion of the mounting slide (4.0) into or removal of the mounting slide (4.0) from the groove (3.0).

4. Device according to any one of claims 1 to 3, wherein the spring latching element (4.3) comprises at least a first spring latching element depression (4.8) arranged proximal to the groove opening edge support rail (4.5).

5. Device according to any one of claims 1 to 4, wherein the groove (3.0) comprises at least a first groove latch projection (3.9) and/or at least a second groove latch projection (3.10), wherein these are arranged opposite one another and are separated from one another by the groove cavity (3.1).

6. Device according to any one of claims 1 to 5, wherein the first groove latch projection (3.9), which is oriented proximal to the groove opening edge support rail (4.5), is engageable in a form-fit manner in the first spring latching element depression (4.8).

7. Device according to any one of claims 1 to 6, wherein the groove (3.0) comprises a third groove latch projection (3.11) spaced apart from the first groove latch projection (3.9) and the second groove latch projection (3.10) and arranged at the groove base (3.3).

8. Device according to any one of claims 1 to 7, wherein the spring latching element (4.3) comprises a third spring latching element depression (4.10) arranged distal to the groove opening edge support rail (4.5) and delimiting the convex curvature (4.6) from a spring latching element underside (4.12) of the spring latching element.

9. Device according to claim 7 or 8, wherein the third groove latch projection (3.11) is engageable in a form-fit manner in the third spring latching element depression (4.10).

10. Device according to any one of claims 1 to 9, wherein the spring latching element (4.3) comprises a second spring latching element depression (4.9), or wherein the spring latching element upper edge (4.13) is configured as a second spring latching element depression (4.9).

11. Device according to any one of claims 1 to 10, wherein the material of the profile rail (2.0) and/or the mounting slide (4.0) comprises a metal, a plastic, glass, ceramic, a composite material, wood, or a combination of at least one of the foregoing.

12. Device according to any one of claims 1 to 11, wherein the profile rail (2.0) and/or the mounting slide (4.0) comprises at least one magnetic element.

13. Device according to any one of claims 1 to 12, wherein the profile rail (2.0) comprises at least one slide locking recess (2.3).

14. Device according to claim 13, wherein the mounting slide (4.0) comprises at least one slide locking projection (4.14).

15. **Method** for reversibly fastening a mounting slide (4.0) to a profile rail (2.0), comprising the following steps:
a) **Providing** a clamp slide rail mounting device (1.0) according to any one of claims 1 to 14, comprising a profile rail (2.0) with at least one groove (3.0), and a mounting slide (4.0) with at least one spring latching element (4.3) and at least one mounting element (4.1),
b) **Positioning** the spring latching element (4.3) within the groove (3.0), wherein the spring latching element (4.3) is insertable into the groove (3.0) without resistance prior to establishment of a form-fit connection and is partially rotatable about the spring latching element longitudinal axis (4.7),
c) **Establishing the form-fit connection** by rotating the spring latching element (4.3) until at least one groove latch projection, preferably the first groove latch projection (3.9), engages in a form-fit manner in a spring latching element depression, preferably the first spring latching element depression (4.8), and the mounting element (4.1) contacts a groove opening edge (3.7), wherein the at least one groove latch projection (3.9) is arranged substantially along the circumference of the circular area of the groove (3.0),
d) Disengaging the form-fit connection by carrying out steps b) and c) in reverse order.

## Revendications

1. Dispositif de maintien de rail de chariot par serrage (1.0) pour la fixation réversible d'un chariot de maintien (4.0) sur un rail profilé (2.0),
le dispositif (1.0) comportant au moins un chariot de maintien (4.0) et au moins un rail profilé (2.0),
le rail profilé (2.0) comportant au moins une rainure (3.0),
la rainure (3.0) comportant une cavité (3.1) de rainure, une profondeur (3.2) de rainure, un fond (3.3) de rainure, une largeur (3.4) de rainure, une ouverture (3.5) de rainure et au moins un bord (3.7) d'ouverture de rainure,
le chariot de maintien (4.0) pouvant être disposé dans la rainure (3.0),
le chariot de maintien (4.0) comportant au moins un élément de maintien (4.1) et au moins un élément d'enclenchement de ressort (4.3) disposé en vis-à-vis de l'élément de maintien,
le chariot de maintien (4.0) comportant une entretoise de support (4.5) de bord d'ouverture de rainure,
l'élément d'enclenchement de ressort (4.3) pouvant tourner au moins en partie à l'intérieur de la rainure (3.0) autour d'un axe longitudinal (4.7) d'élément d'enclenchement de ressort jusqu'à une position d'immobilisation de l'élément d'enclenchement de ressort (4.3),
l'élément d'enclenchement de ressort (4.3) pouvant être relié de manière réversible à la rainure (3.0), **caractérisé en ce que**
au moins un renfoncement d'élément d'enclenchement de ressort (4.8, 4.9, 4.10) est en liaison fonctionnelle avec au moins une partie surélevée d'enclenchement de rainure (3.9, 3.10, 3.11), l'au moins une partie surélevée d'enclenchement de rainure (3.9, 3.10, 3.11) étant disposée sensiblement le long de la périphérie de la surface circulaire de la rainure (3.0),
ou au moins une partie surélevée (5.1, 5.2, 5.3) d'élément d'enclenchement de ressort venant en prise avec un renfoncement d'enclenchement de rainure (6.1, 6.2, 6.3),
la rainure (3.0) comprenant au moins le renfoncement d'enclenchement de rainure (6.1, 6.2, 6.3).

2. Dispositif selon la revendication 1, l'entretoise de support (4.5) de bord d'ouverture de rainure élément d'enclenchement de ressort (4.3) configurée comme un contact de pression.

3. Dispositif selon la revendication 1 ou 2, la forme de l'élément d'enclenchement de ressort (4.3) et/ou la forme de l'entretoise de support (4.5) de bord d'ouverture de rainure sont mises au point pour permettre un retour haptique pendant la liaison réversible ou pendant le retrait du chariot de maintien (4.0) dans ou hors de la rainure (3.0).

4. Dispositif selon l'une des revendications 1 à 3, l'élément d'enclenchement de ressort (4.3) comprenant au moins un premier renfoncement d'élément d'enclenchement de ressort (4.8), qui est disposé de manière proximale par rapport à l'entretoise de support (4.5) de bord d'ouverture de rainure.

5. Dispositif selon l'une des revendications 1 à 4, la rainure (3.0) comportant au moins une première partie surélevée d'enclenchement de rainure (3.9) et/ou au moins une deuxième partie surélevée d'enclenchement de rainure (3.10), qui sont disposés en vis-à-vis l'une de l'autre et sont séparées l'une de l'autre par la cavité (3.1) de rainure.

6. Dispositif selon l'une des revendications 1 à 5, la première partie surélevée d'enclenchement de rainure (3.9), qui est orientée de manière proximale par rapport à l'entretoise de support (4.5) de bord d'ouverture de rainure, peut venir en prise par complémentarité de forme dans avec le premier renfoncement d'élément d'enclenchement de ressort (4.8).

7. Dispositif selon l'une des revendications 1 à 6, la rainure (3.0) comportant une troisième partie surélevée d'enclenchement de rainure (3.11), qui est espacée de la première partie surélevée d'enclenchement de rainure (3.9) et de la deuxième partie surélevée d'enclenchement de rainure (3.10) et qui est disposée sur le fond (3.3) de rainure.

8. Dispositif selon l'une des revendications 1 à 7, l'élément d'enclenchement de ressort (4.3) comportant un troisième renfoncement d'élément d'enclenchement de ressort (4.10), qui est disposé de manière distale par rapport à l'entretoise de support (4.5) de bord d'ouverture de rainure et sépare le bombement convexe (4.6) d'un côté inférieur (4.12) d'élément d'enclenchement de ressort.

9. Dispositif selon la revendication 7 ou 8, la troisième partie surélevée d'enclenchement de rainure (3.11) pouvant venir en prise par complémentarité de forme avec le troisième renfoncement d'élément d'enclenchement de ressort (4.10).

10. Dispositif selon l'une des revendications 1 à 9, l'élément d'enclenchement de ressort (4.3) comportant un deuxième renfoncement d'élément d'enclenchement de ressort (4.9), ou le bord supérieur (4.13) d'élément d'enclenchement de ressort étant configuré comme un deuxième renfoncement d'élément d'enclenchement de ressort (4.9).

11. Dispositif selon l'une des revendications 1 à 10, le matériau du rail profilé (2.0) et/ou du chariot de maintien (4.0) comprenant un métal, ou une matière plastique, ou un verre, ou une céramique, ou un matériau composite, ou un bois ou une combinaison d'au moins un des éléments précédents.

12. Dispositif selon l'une des revendications 1 à 11, le rail profilé (2.0) et/ou le chariot de maintien (4.0) comportant au moins un élément magnétique.

13. Dispositif selon l'une des revendications 1 à 12, le rail profilé (2.0) comportant au moins un évidement de blocage de chariot (2.3).

14. Dispositif selon la revendication 13, le chariot de maintien (4.0) comportant au moins une garniture de blocage de chariot (4.14).

15. Procédé de fixation réversible d'un chariot de maintien (4.0) sur un rail profilé (2.0) comprenant les étapes suivantes :
a) fourniture d'un dispositif de maintien de rail de chariot par serrage (1.0) selon l'une des revendications 1 à 14, comportant un rail profilé (2.0) avec au moins une rainure (3.0), ainsi qu'un chariot de maintient (4.0) avec au moins un élément d'enclenchement de ressort (4.3) et au moins un élément de maintien (4.1),
b) positionnement de l'élément d'enclenchement de ressort (4.3) à l'intérieur de la rainure (3.0), l'élément d'enclenchement de ressort (4.3) pouvant être introduit sans résistance dans la rainure (3.0) avant d'établir une liaison par complémentarité de forme et pouvant être tourné en partie autour de l'axe longitudinal (4.7) d'élément d'enclenchement de ressort,
c) établissement de la liaison par complémentarité de forme en tournant l'élément d'enclenchement de ressort (4.3) jusqu'à ce qu'au moins une partie surélevée d'enclenchement de rainure, de manière préférée la première partie surélevée d'enclenchement de rainure (3.9) vienne en prise avec un renfoncement d'élément d'enclenchement de ressort, de manière préférée le premier renfoncement d'élément d'enclenchement de ressort (4.8) et l'élément de maintien (4.1) entre en contact avec un bord (3.7) d'ouverture de rainure, l'au moins une partie surélevée d'enclenchement de rainure (3.9) étant disposée sensiblement le long de la périphérie de la surface circulaire de la rainure (3.0),
d) fin de la liaison par complémentarité de forme en effectuant les étapes b) et c) dans l'ordre inverse.
